# EUROPEAN PATENT APPLICATION

(11) **EP 4 808 186 A1**
(43) Date of publication of application: **16.09.2026**
(21) Application number: 24888453.8
(22) Date of filing: 09.10.2024
(51) Int. Cl.: H04W 16/28, H04B 7/06, H04B 7/0456, H04W 72/232, H04W 84/12

(54) **ACCESS POINT, TERMINAL, AND COMMUNICATION METHOD**

(30) Priority: 09.11.2023 JP 2023191792
(71) Applicant: Panasonic Intellectual Property Corporation of America, Torrance, CA 90504 (US)
(72) Inventor: NISHI, Shinjiro, Kadoma-shi, Osaka 571-0057 (JP); IWAI, Takashi, Kadoma-shi, Osaka 571-0057 (JP); MINOTANI, Jun, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2024/036160
(87) International publication number: WO 2025/100155

(57) **Abstract**

This access point comprises: a transmission circuit that transmits, to a terminal, information pertaining to a pattern of a stream associated with an uplink signal from the terminal; and a reception circuit that receives a signal precoded on the basis of the pattern.

## Description

### Technical Field

The present disclosure relates to an access point, a terminal, and a communication method.

### Background Art

In the Institute of Electrical and Electronics Engineers (IEEE) Study Group (SG), the IEEE 802.11bn standard (hereinafter also referred to as "11bn") for next-generation Wireless Local Area Network (WLAN) is under discussion as a successor standard to IEEE 802.11be (hereinafter also referred to as "11be"). 11be is also referred to as "Extremely High Throughput (EHT) WLAN" or simply "EHT," and 11bn is also referred to as "Ultra High Reliability (UHR) WLAN" or simply "UHR." Specifications used in WLAN (also referred to as wireless LAN) include IEEE 802.11 and its amendment standards (such as IEEE 802.11ax, IEEE 802.11be, and other future standards), IEEE 802.15, and the like.

### Citation List

### Non-Patent Literature

NPL 1
   IEEE 802.11-22/1392r0, "Beamforming Improvement for UHR"
NPL 2
   IEEE 802.11-23/0725r0, "Uplink MU MIMO Precoding - Follow-up"
NPL 3
   IEEE P802.11be/D4.0
NPL 4
   IEEE 802.11-2020
NPL 5
   IEEE 802.11-14/0571r12, "11ax Evaluation Methodology"
NPL 6
   Daisuke Ogawa, et al., "A Low Complexity PMI/RI Selection Scheme in LTE-A systems," VTC Spring 2013, IEEE
NPL 7
   IEEE 802.11-19/1593r3, "Joint Sounding for Multi-AP Systems"
NPL 8
   IEEE 802.11-19/0804r0, "Multi-AP Transmission Procedure"

### Summary of Invention

However, a method for controlling signal transmission in radio communication such as a wireless LAN has not been sufficiently studied.

A non-limiting embodiment of the present disclosure facilitates providing an access point, a terminal, and a communication method each capable of improving the efficiency of transmission control in radio communication.

An access point according to an embodiment of the present disclosure includes: transmission circuitry, which, in operation, transmits, to a terminal, information related to a pattern of a stream associated with an uplink signal from the terminal; and reception circuitry, which, in operation, receives a signal precoded based on the pattern.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[FIG. 1] FIG. 1 illustrates a sequence example of uplink (UL) precoding;
[FIG. 2] FIG. 2 is a block diagram illustrating a configuration example of a part of an access point (AP);
[FIG. 3] FIG. 3 is a block diagram illustrating a configuration example of a part of a terminal (STA: Station);
[FIG. 4] FIG. 4 is a block diagram illustrating a configuration example of the AP;
[FIG. 5] FIG. 5 is a block diagram illustrating a configuration example of the STA;
[FIG. 6] FIG. 6 illustrates a sequence example of operations of the AP and the STA;
[FIG. 7] FIG. 7 illustrates an example of a correspondence relationship between a P-matrix and a stream number;
[FIG. 8] FIG. 8 illustrates exemplary stream numbers in time division multiplexing and frequency division multiplexing;
[FIG. 9] FIG. 9 illustrates an example of a stream number pattern;
[FIG. 10] FIG. 10 illustrates an example of a stream number pattern;
[FIG. 11] FIG. 11 illustrates an example of a stream number pattern;
[FIG. 12] FIG. 12 illustrates an example of a stream number pattern;
[FIG. 13] FIG. 13 illustrates an example of a stream number pattern;
[FIG. 14] FIG. 14 illustrates an example of a Common Info field in a Trigger frame;
[FIG. 15] FIG. 15 illustrates an example of a User Info field in the Trigger frame;
[FIG. 16] FIG. 16 illustrates an example of a Stream Number Pattern subfield;
[FIG. 17] FIG. 17 illustrates a sequence example of operations of the AP and the STA;
[FIG. 18] FIG. 18 illustrates a sequence example of operations of the AP and the STA;
[FIG. 19] FIG. 19 illustrates a sequence example of operations of the AP and the STA;
[FIG. 20] FIG. 20 illustrates an example of an STA Info field in a Null data packet Announcement (NDPA);
[FIG. 21] FIG. 21 illustrates an example of a Generate Precoder subfield;
[FIG. 22] FIG. 22 illustrates an example of stream number notification in an NDPA;
[FIG. 23] FIG. 23 illustrates an example and an effect of the number of streams allocated to the STA;
[FIG. 24] FIG. 24 illustrates an example of a Trigger type in a Trigger frame;
[FIG. 25] FIG. 25 illustrates an example of a Common Info field in the Trigger frame;
[FIG. 26] FIG. 26 illustrates an example of a User Info field in the Trigger frame;
[FIG. 27] FIG. 27 illustrates an example of a Number Of HE/EHT-LTF Symbols subfield;
[FIG. 28] FIG. 28 illustrates a sequence example of operations of the AP and the STA;
[FIG. 29] FIG. 29 illustrates a sequence example of operations of the AP and the STA;
[FIG. 30] FIG. 30 illustrates a sequence example of operations of the AP and the STA;
[FIG. 31] FIG. 31 illustrates an example and an effect of an orthogonal resource;
[FIG. 32] FIG. 32 illustrates an example of a Precoder Type subfield;
[FIG. 33] FIG. 33 is a block diagram illustrating a configuration example of an AP;
[FIG. 34] FIG. 34 illustrates a sequence example of operations of the AP and the STA;
[FIG. 35] FIG. 35 illustrates an example of a Trigger type in a Trigger frame;
[FIG. 36] FIG. 36 illustrates a format example of the Trigger frame;
[FIG. 37] FIG. 37 illustrates an example of a Common Info field in the Trigger frame;
[FIG. 38] FIG. 38 illustrates an example of a User Info field in the Trigger frame;
[FIG. 39] FIG. 39 illustrates an example of a Precoder Calculation Indication subfield;
[FIG. 40] FIG. 40 illustrates a format example of a Multi-AP (MAP) NDPA;
[FIG. 41] FIG. 41 illustrates an example of a User Info field in the Trigger frame;
[FIG. 42] FIG. 42 illustrates an example of a Joint Sounding subfield;
[FIG. 43] FIG. 43 illustrates an example of a Trigger type in a Trigger frame;
[FIG. 44] FIG. 44 illustrates an example of a Common Info field in the Trigger frame; and
[FIG. 45] FIG. 45 illustrates an example of a User Info field in the Trigger frame.

### Description of Embodiments

Hereinafter, embodiments of the present disclosure will be described in detail with reference to the accompanying drawings.

Examples of the focuses of UHR include throughput improvement at different reception qualities (e.g., Signal-to-Noise Ratio (SNR) levels). In order to achieve this target, for example, the application of beamforming (BF) in the uplink (UL) is expected (e.g., see NPL 1).

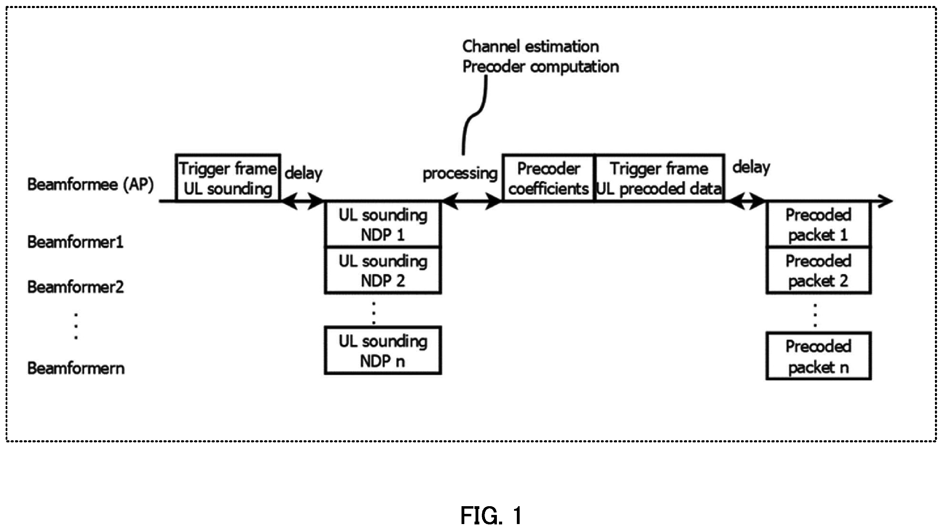

Regarding a precoder used for BF, a method has been proposed in which an Access Point (AP, also referred to as "base station") estimates channel quality (Sounding) and calculates an UL precoder based on an uplink signal (e.g., Null Data Packet (NDP)) from a terminal (station: STA, also referred to as "non-AP STA"), and notifies each STA of the UL precoder (see, e.g., NPL 2). Note that the precoder is used to perform linear operation on modulation signals, and is also referred to as, for example, a precoding matrix, a beamforming matrix, or a steering matrix. In NPL 2, in the sequence illustrated in FIG. 1, for UL Multi User - Multi Input Multi Output (UL MU-MIMO) precoding, an AP (beamformee) calculates a precoder based on uplink signals (e.g., UL sounding NDP) from STAs (beamformer), and notifies each STA of precoder coefficients.

However, a method for controlling UL precoding has not been sufficiently studied.

For example, in the method described in NPL 2, there is a concern that the overhead (signaling overhead) may increase when the AP notifies each STA of the precoder.

In contrast, as an exemplary method for controlling precoding with low overhead, implicit feedback is defined (e.g., see "10.34.1 HT steering matrix calculations" in NPL 4). In this method, channel quality estimation and precoder calculation are performed based on the reciprocity between the uplink and the downlink (DL). Here, in a case where the reciprocity between the uplink and the downlink does not hold, there is a concern about deterioration in BF performance and deterioration in reception quality. For example, as conditions under which the reciprocity between the uplink and the downlink does not hold, the influence of an interference signal, frequency and phase errors between a transmitter (Tx) and a receiver (Rx) due to insufficient calibration frequency, and the like are given.

In a non-limiting embodiment of the present disclosure, an exemplary precoding control method that suppresses an increase in overhead and suppresses deterioration in reception quality when the reciprocity between the uplink and the downlink does not hold will be described.

### [Configuration of Radio Communication System]

The radio communication system according to the present embodiment may include, for example, AP 100 and STA 200. In the radio communication system, for example, two or more APs 100 and STAs 200 may be present.

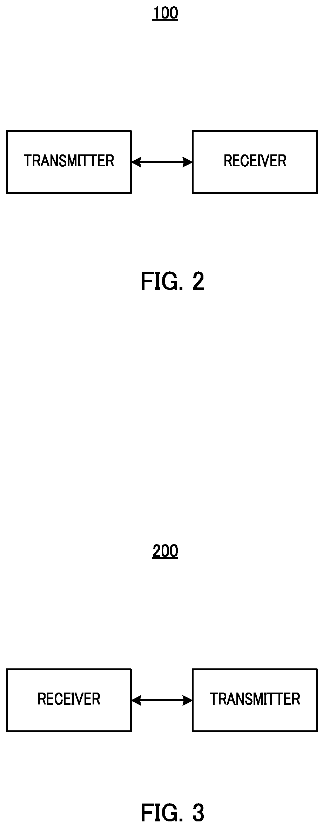

FIG. 2 is a block diagram illustrating an exemplary configuration of a part of AP 100 according to the embodiment of the present disclosure. In AP 100 illustrated in FIG. 2, a transmitter (e.g., corresponding to transmission circuitry) transmits, to STA 200, information related to a pattern of a stream associated with an uplink signal (e.g., also referred to as stream number pattern) from STA 200. A receiver (e.g., reception circuitry) receives a signal (e.g., UL data) precoded based on the pattern.

FIG. 3 is a block diagram illustrating a configuration example of a part of STA 200 according to the embodiment of the present disclosure. In STA 200 illustrated in FIG. 3, a receiver (e.g., corresponding to reception circuitry) receives information related to a pattern of a stream associated with an uplink signal from STA 200. A transmitter (e.g., corresponding to transmission circuitry) transmits a signal precoded based on the pattern.

### (Embodiment 1)

In the present embodiment, AP 100 performs UL precoding control by notifying STA 200 of a control signal including information related to a pattern (hereinafter, referred to as "stream number pattern") of a stream (e.g., stream number) associated with a UL signal from STA 200.

The stream number pattern indicates, for example, one or a combination of a plurality of numbers assigned to (or associated with) each of a plurality of streams constituting (or applied to) a UL signal. The stream number is determined based on, for example, a UL signal from STA 200.

The stream number pattern may include, for example, at least one of a plurality of streams applied to the UL signal. For example, the stream number pattern may include consecutive or non-consecutive stream numbers among the numbers (stream numbers) assigned to the plurality of streams applied to the UL signal. The stream may be, for example, a spatial stream or a space-time stream. Hereinafter, in a case where space-time block coding (STBC) is not performed, it is assumed that the space-time stream is equal to the spatial stream.

Further, the UL signal may be, for example, a UL signal received by AP 100 from STA 200 (e.g., UL signal received most recently). The UL signal may include, for example, an NDP to which a precoder is applied or a signal including data to which a precoder is applied. Further, the term "most recent" refers to, for example, the most recent time at which AP 100 received a UL signal from STA 200 before transmitting a control signal.

Further, the control signal may include, for example, control information of a precoder applied to the UL signal. The control information may include, for example, information related to a stream number pattern.

Hereinafter, configuration examples of AP 100 and STA 200 according to the present embodiment will be described.

### [Configuration Example of AP 100]

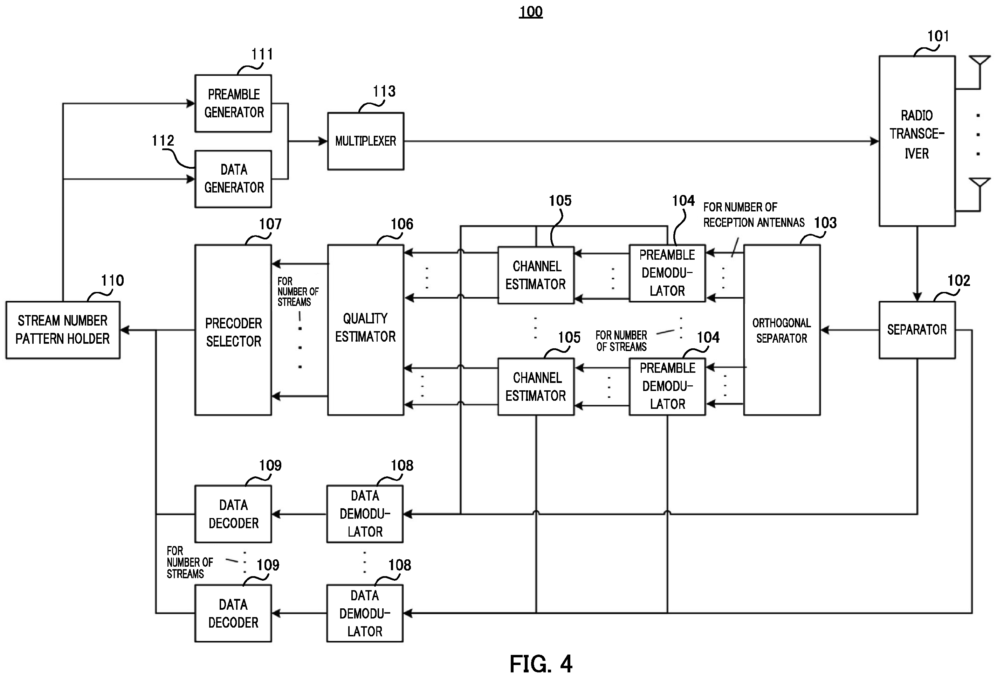

FIG. 4 is a block diagram illustrating a configuration example of AP 100.

AP 100 illustrated in FIG. 4 may include, for example, radio transceiver 101, separator 102, orthogonal separator 103, preamble demodulator 104, channel estimator 105, quality estimator 106, precoder selector 107, data demodulator 108, data decoder 109, stream number pattern holder 110, preamble generator 111, data generator 112, and multiplexer 113.

Note that radio transceiver 101 illustrated in FIG. 4 may be included in the transmitter illustrated in FIG. 2, and radio transceiver 101 illustrated in FIG. 4 may be included in the receiver illustrated in FIG. 2.

In FIG. 4, radio transceiver 101 performs radio signal transmission/reception processing for STA 200. For example, in the transmission processing, radio transceiver 101 performs digital-to-analog (D/A) conversion, up-conversion to a carrier frequency, and the like on a radio frame output from multiplexer 113, and transmits the signal after the transmission processing to STA 200 via an antenna. Further, for example, in the reception processing, radio transceiver 101 receives a signal transmitted from STA 200 via an antenna, performs down-conversion, analog-to-digital (A/D) conversion, and the like, and outputs the signal after the reception processing to separator 102.

Separator 102 separates (or divides) the signal received from STA 200, which is output from radio transceiver 101, into a preamble part (or preamble signal) and a data part (or data signal), outputs the preamble signal to orthogonal separator 103, and outputs the data signal to data demodulator 108.

Orthogonal separator 103 performs Fourier transform (e.g., Fast Fourier transform (FFT)) on the preamble signal output from separator 102, and extracts control information (e.g., orthogonal resources and the like) used in STA 200 (e.g., orthogonalizer 215 described later). Then, orthogonal separator 103 performs separation on a reference signal in the preamble signal (e.g., training signal such as long training field (LTF) or short training field (STF)) based on the extracted control information. Here, the reference signal is separated into, for example, dimensions of the number of reception antennas and the number of streams. Orthogonal separator 103 outputs the separated preamble to preamble demodulator 104.

Preamble demodulator 104 demodulates the preamble signal output from orthogonal separator 103, extracts control information (e.g., frequency bandwidth (BW)) or modulation and coding scheme (MCS)) used for demodulation and decoding of the data signal, and outputs the extracted control information to data demodulator 108. Further, preamble demodulator 104 extracts the reference signal included in the preamble signal and outputs the reference signal to channel estimator 105.

Channel estimator 105 estimates the UL channel from STA 200 to AP 100 based on the output of preamble demodulator 104. Channel estimator 105 performs channel estimation for each reception stream and for each reception antenna, for example. Channel estimator 105 outputs the derived channel estimation values to quality estimator 106 and data demodulator 108.

Quality estimator 106 estimates the reception quality (e.g., SNR or signal-to-interference-plus-noise ratio (SINR)) per stream and per reception antenna of the signal received by AP 100, based on the channel estimation values output from channel estimator 105. As an example, in a case where the SINR is estimated, quality estimator 106 may estimate each SINR per reception stream and per reception antenna using the calculation formula described in NPL 5. Quality estimator 106 outputs the derived estimation values of the reception quality to precoder selector 107.

Precoder selector 107 generates control information that AP 100 transmits to STA 200, based on the estimation values of the reception quality output from quality estimator 106. For example, precoder selector 107 may select a precoder (e.g., stream number pattern) used for transmission by STA 200, based on the estimation values of the reception quality. As an example, precoder selector 107 may perform optimization (rank adaptation) of the transmission rank of STA 200 based on the SINR output from quality estimator 106. For example, rank adaptation may be a procedure of determining a spatial stream or/and the number of spatial streams in which the throughput and/or the communication quality is improved (e.g., see NPL 6). For example, precoder selector 107 determines a combination of stream numbers (stream number pattern) used for UL transmission by STA 200 by rank adaptation, and outputs the determined stream number pattern to stream number pattern holder 110.

Data demodulator 108 performs FFT on the data signal output from separator 102, and performs demodulation processing based on the control information output from preamble demodulator 104 and the UL channel estimation values output from channel estimator 105. Data demodulator 108 outputs the demodulated data signal obtained by demodulation to data decoder 109. In addition, data demodulator 108 may output the control information output from preamble demodulator 104 to data decoder 109.

Data decoder 109 performs decoding on the demodulated data signal output from data demodulator 108, based on the output (control information) of preamble demodulator 104. Note that, in a case where the UL signal is a Trigger Based (TB) physical layer (PHY) protocol data unit (PPDU), data decoder 109 may hold control information (e.g., MCS or coding type) included in a Trigger frame (signal indicating to STA 200 transmission of TB PPDU) transmitted by AP 100, and perform decoding based on the control information.

Stream number pattern holder 110 stores the stream number pattern output from precoder selector 107 in a storage area (e.g., buffer). Stream number pattern holder 110 may output the stream number pattern to data generator 112 at the time of control signal generation, for example, for AP 100 to notify STA 200.

Preamble generator 111 generates a preamble signal (e.g., EHT-SIG, EHT-LTF, U-SIG, and the like) to be included in the control signal transmitted from AP 100 to STA 200. Preamble generator 111 outputs the generated preamble signal to the multiplexer.

Data generator 112 generates a data signal (e.g., NDP announcement (NDPA) frame or Trigger frame). The data signal may include, for example, a stream number pattern output from stream number pattern holder 110. Here, in a case where a Trigger frame indicating to STA 200 transmission of TB PPDU is generated, AP 100 stores control information (e.g., MCS or coding type) of the data signal in the TB PPDU in a storage area. Data generator 112 outputs the generated data signal to multiplexer 113.

Multiplexer 113 performs modulation and inverse Fourier transform (e.g., Inverse Fast Fourier transform (IFFT)) on the preamble signal output from preamble generator 111 and the data signal output from data generator 112, multiplexes the signals in accordance with the format of the radio frame, and outputs the multiplexed signals to radio transceiver 101 as a radio frame. Here, the reference signal included in the preamble signal may be allocated and orthogonalized to a predetermined orthogonal resource.

### [Configuration Example of STA 200]

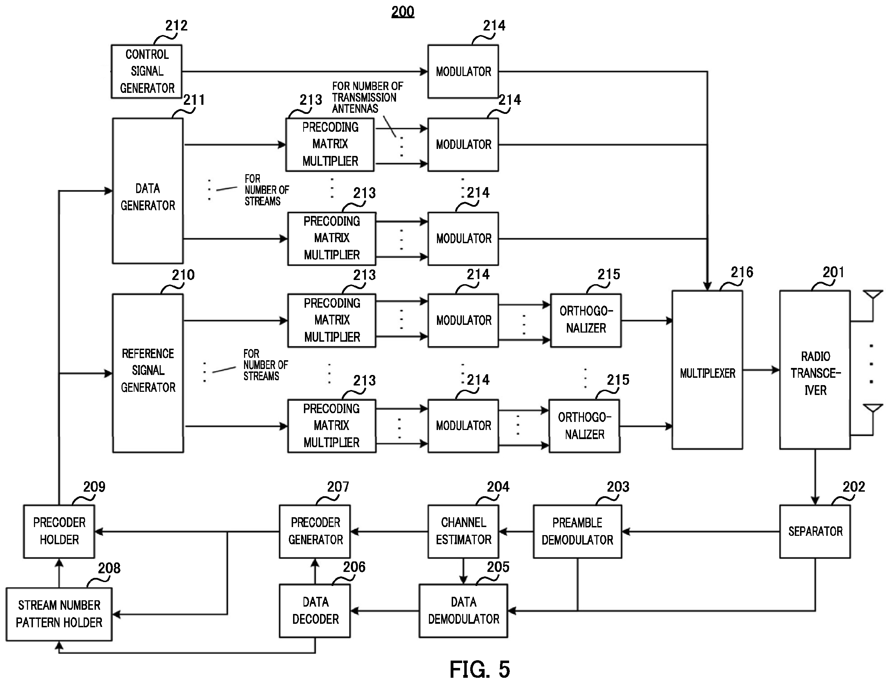

FIG. 5 is a block diagram illustrating a configuration example of STA 200.

STA 200 illustrated in FIG. 5 may include, for example, radio transceiver 201, separator 202, preamble demodulator 203, channel estimator 204, data demodulator 205, data decoder 206, precoder generator 207, stream number pattern holder 208, precoder holder 209, reference signal generator 210, data generator 211, control signal generator 212, precoding matrix multiplier 213, modulator 214, orthogonalizer 215, and multiplexer 216.

Note that radio transceiver 201 illustrated in FIG. 5 may be included in the receiver illustrated in FIG. 3, and radio transceiver 201 illustrated in FIG. 5 may be included in the transmitter illustrated in FIG. 3.

In FIG. 5, radio transceiver 201 performs radio signal transmission/reception processing for AP 100. For example, in the transmission processing, radio transceiver 201 performs D/A conversion, up-conversion to a carrier frequency, and the like on a radio frame output from multiplexer 216, and transmits the signal after the transmission processing to AP 100 via an antenna. Further, for example, in the reception processing, radio transceiver 201 receives a signal transmitted from AP 100 via an antenna, performs down-conversion, A/D conversion, and the like, and outputs the signal after the reception processing to separator 202.

Separator 202 separates (or divides) the signal received from AP 100, which is output from radio transceiver 201, into a preamble part (or preamble signal) and a data part (or data signal), outputs the preamble signal to preamble demodulator 203, and outputs the data signal to the data demodulator.

Preamble demodulator 203 performs Fourier transform (FFT) on the preamble signal output from separator 202, extracts control information (e.g., BW or MCS) used for demodulation and decoding of the data signal, and outputs the control information to data demodulator 205. Further, preamble demodulator 203 extracts a reference signal (e.g., LTF or STF) included in the preamble signal and outputs the reference signal to channel estimator 204.

Channel estimator 204 estimates the channel quality based on the output of preamble demodulator 203. The channel estimation value derived in channel estimator 204 is a DL channel estimation value from AP 100 to STA 200. For example, channel estimator 204 outputs the DL channel estimation value to data demodulator 205 for demodulating the data signal. Here, STA 200 may derive a UL channel estimation value (e.g., channel from STA 200 to AP 100) from the DL channel estimation value, assuming that channel reciprocity exists between UL and DL, for example. Channel estimator 204 outputs the derived UL channel estimation value to precoder generator 207.

Data demodulator 205 performs FFT on the data signal output from separator 202 and performs demodulation processing based on the control information output from preamble demodulator 203 and the DL channel estimation value output from channel estimator 204. Data demodulator 205 outputs the demodulated data signal obtained by demodulation, to data decoder 206. In addition, data demodulator 205 may output the control information output from preamble demodulator 203 to data decoder 206.

Data decoder 206 performs decoding on the demodulated data signal output from data demodulator 205, based on the output (control information) of preamble demodulator 203. When the received data obtained by decoding includes a stream number pattern, data decoder 206 outputs the stream number pattern to stream number pattern holder 208. Further, when the control information of a precoder from AP 100 (e.g., generation type of the precoder, the number of transmission streams, and orthogonal resource information used for the transmission stream (e.g., orthogonal code, frequency, time, and the like)) is included, data decoder 206 outputs the control information to precoder generator 207.

Precoder generator 207 generates a precoder (precoding matrix) based on the UL channel estimation value output from channel estimator 204 and the control information output from data decoder 206. Precoder generator 207 outputs information related to the generated precoder so that the precoder is applied to a reference signal and a data signal to be transmitted by STA 200. For example, precoder generator 207 outputs the generated precoder to the precoder holder so that STA 200 can select a precoder based on control information (stream number pattern) from AP 100. Further, precoder generator 207 determines a stream number associated with each stream applied to the UL transmission of STA 200 and outputs the stream number to stream number pattern holder 208.

Stream number pattern holder 208 stores the stream number output from precoder generator 207 in a storage area (buffer). Further, when the stream number pattern is output from the data decoder, stream number pattern holder 208 extracts the stream number designated by the stream number pattern from the stored stream numbers and outputs the extracted stream number to precoder holder 209.

Precoder holder 209 stores the precoder output from precoder generator 207 in a storage area. Further, precoder holder 209 extracts the components in the precoding matrix based on the stream number (designated stream number) output from stream number pattern holder 208 and outputs the components to, for example, precoding matrix multiplier 213 (not shown). Here, the process of selecting and extracting the components in the precoding matrix to obtain a reconfigured precoding matrix is referred to as reconfiguration of precoder or selection of precoder.

Reference signal generator 210 generates a reference signal (e.g., LTF, STF, or the like) to be included in the preamble signal of the UL signal. The reference signal generated by reference signal generator 210 is assumed to be subjected to precoder application and orthogonalization in subsequent processing. For example, reference signal generator 210 may generate a reference signal based on the number of streams determined by precoder generator 207 and the control information (e.g., the number of streams or the frequency indicated by AP 100) acquired by data decoder 206. Further, reference signal generator 210 may determine the number of streams of the reference signal according to the number of stream numbers output from precoder holder 209 (the number of stream numbers indicated by the stream number pattern from AP 100) or the number of columns of the reconfigured precoding matrix. Reference signal generator 210 outputs the generated reference signal to precoding matrix multiplier 213.

Data generator 211 generates a data signal (e.g., MAC protocol data unit (MPDU)) to be included in the UL signal. The signal generated by data generator 211 is assumed to be subjected to precoder application in subsequent processing, and is not assumed to be subjected to the application of orthogonalization unlike the reference signal. Further, data generator 211 may determine the number of streams of the data signal according to the number of stream numbers output from precoder holder 209 (the number of stream numbers indicated by the stream number pattern from AP 100) or the number of columns of the reconfigured precoding matrix. Data generator 211 outputs the generated data signal to precoding matrix multiplier 213.

Control signal generator 212 generates a control signal (e.g., preamble signal excluding reference signal such as EHT-SIG and U-SIG) to be included in the preamble signal of the UL signal. Unlike the reference signal and the data signal, the signal generated by control signal generator 212 is not assumed to be subjected to precoder application and orthogonalization in subsequent processing. Control signal generator 212 outputs the generated control signal to modulator 214.

Precoding matrix multiplier 213 multiplies the signals output from reference signal generator 210 and data generator 211 by the precoding matrix output from precoder holder 209. Here, different components of the precoding matrix are multiplied for each stream and each transmission antenna. Precoding matrix multiplier 213 outputs the signals after precoding matrix multiplication (precoded signal) to modulator 214.

Modulator 214 performs modulation and inverse Fourier transform (IFFT) on the precoded signal output from precoding matrix multiplier 213 and the control signal output from control signal generator 212, and outputs the modulated signals to multiplexer 216. Note that, in a case where the precoded signal is a reference signal, modulator 214 outputs the modulated signals (modulation reference signal) to orthogonalizer 215.

Orthogonalizer 215 orthogonalizes the modulation reference signals output from modulator 214 using an orthogonal resource. For example, in a case where an orthogonal code (e.g., P-matrix) is used for the resource, orthogonalizer 215 multiplies each stream of the modulation reference signals by a different orthogonal code to be mapped to each transmission antenna. Orthogonalizer 215 outputs the orthogonalized modulation reference signals to multiplexer 216.

Multiplexer 216 multiplexes the orthogonalized modulated reference signals and the modulated signals (signal obtained by multiplying and modulating the data signal and control signal by the precoding matrix) according to the radio frame format, and outputs the multiplexed signals as a radio frame to radio transceiver 201.

The configuration examples of AP 100 and STA 200 have been described above.

### [Operation Examples of AP 100 and STA 200]

Hereinafter, operation examples of AP 100 and STA 200 will be described.

### [Method 1]

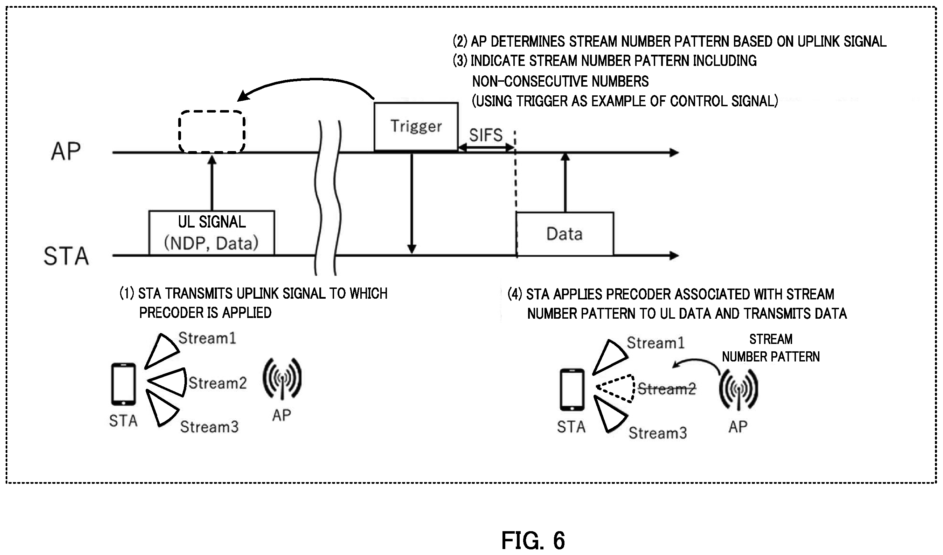

FIG. 6 is a sequence diagram illustrating an operation example of AP 100 (simply referred to as AP) and STA 200 (simply referred to as STA) in Method 1.

### (Transmission of UL Signal to Which Precoder Is Applied)

In FIG. 6, STA 200 transmits a UL signal to which a precoder is applied (e.g., UL signal to which a plurality of streams is applied).

The UL signal may be, for example, a TB PPDU (e.g., data signal) in which a precoding matrix is multiplied with a reference signal and data, or an NDP in which a precoding matrix is multiplied only with a reference signal without generating data. The NDP to which a precoding matrix is applied may also be referred to as a precoded NDP, beamformed NDP, or steered NDP.

STA 200 (e.g., precoding matrix multiplier 213) multiplies, for example, a reference signal and a data signal by the precoding matrix. The precoding matrix corresponds to a Q-matrix and is multiplied as, for example, variable Q_{k,u} in Equation (36-35) or Equation (36-46) described in NPL 3 for STF, variable Qₖ and Q_{k,u} in Equation (36-44) or Equation (36-45) described in NPL 3 for LTF, and variable Q_{k,u} in Equation (36-87) or Equation (90) described in NPL 3 for data signal.

Further, STA 200 (e.g., orthogonalizer 215) performs orthogonalization on the reference signal. As an example, orthogonalization using an orthogonal code (P-matrix) will be described.

The stream number of each stream constituting the UL signal may correspond to, for example, the rows of the P-matrix included in the reference signal. AP 100 specifies (or grasps) the stream number of each stream constituting the UL signal by orthogonally separating the streams corresponding to the rows of the P-matrix. For example, the stream number is determined based on the uplink signal of STA 200. For example, in a case where the UL signal uses three streams (in the case of 3-stream transmission), the P-matrix (P_{EHT-LTF}) indicated in Equation (1) is used for LTF (e.g., Equation (36-43) in NPL 3).
${P}_{EHT - LTF} = \left[\begin{matrix}1 & - 1 & 1 & 1 \\ 1 & 1 & - 1 & 1 \\ 1 & 1 & 1 & - 1 \\ - 1 & 1 & 1 & 1\end{matrix}\right]$

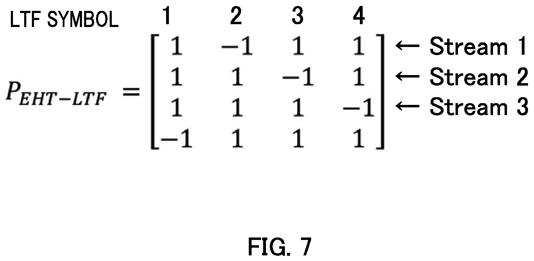

In the case of 3-stream transmission, for example, as illustrated in FIG. 7, four values in each of the first to third rows of the P-matrix are multiplied to four LTF symbols of each stream. For example, the streams corresponding to the first, second, and third rows of the P-matrix may be set to stream 1, stream 2, and stream 3 constituting the UL signal (e.g., LTF), and the stream numbers of each stream may be associated with the first, second, and third rows of the P-matrix.

Note that AP 100 determines the number of streams constituting the UL signal based on the capability of STA 200, and it is assumed that the recognition of the number of streams of the UL signal is consistent between AP and STA.

### (Reception of UL Signal and Acquisition of Stream Number)

AP 100 (e.g., orthogonal separator 103) refers to an NSS subfield from the control signal (e.g., EHT-SIG) after receiving the UL signal, and acquires the number of streams of the UL signal and the stream number associated with the P-matrix.

AP 100 performs orthogonal separation of the reference signal based on the acquired control information.

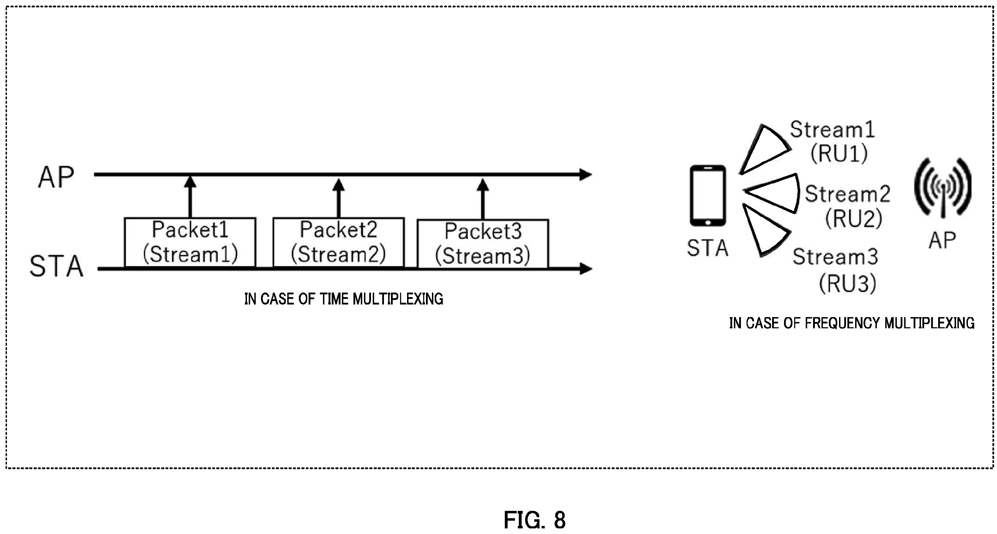

AP 100 (e.g., preamble demodulator 104) demodulates the preamble signal of each stream that has been orthogonally separated. Here, in a case where the UL signal is a signal including data (e.g., TB PPDU) and code division multiplexing is applied, AP 100 acquires the stream number associated with the P-matrix, similarly to NDP. The stream number in a case where the UL signal is a signal including data (e.g., TB PPDU) and a multiplexing method different from code division multiplexing (e.g., time division multiplexing or frequency division multiplexing) is applied, however, will be described with reference to FIG. 8.

In FIG. 8, in a case of time division multiplexing, STA 200 and AP 100 each recognize streams of packets transmitted consecutively in time as different stream numbers, and store the stream numbers in a storage area (e.g., stream number pattern holders 110 and 208). For example, as illustrated in FIG. 8, in a case where three packets are each transmitted from STA 200 using one stream, the streams of packets 1, 2, and 3 are set to streams 1, 2, and 3, respectively. In this case, the same P-matrix may be used for streams 1, 2, and 3.

Further, for example, in a case where three packets are each transmitted using two streams, the stream of packet 1 may be set to streams 1 and 2, the stream of packet 2 may be set to streams 3 and 4, and the stream of packet 3 may be set to streams 5 and 6. Here, the stream numbers in the same packet (e.g., streams 1 and 2 in packet 1) may be recognized by the difference in the rows of the P-matrix described above.

Note that, in FIG. 8, an example has been described in which a packet is transmitted with a gap section (non-transmission section) of a predetermined time, but the present disclosure is not limited thereto, and a packet of a predetermined length may be continuously transmitted without a gap section.

In FIG. 8, in the case of frequency division multiplexing, STA 200 and AP 100 recognize the streams of the signals transmitted in different frequency bands (or frequency resources) as different stream numbers, and store the stream numbers in a storage area (e.g., stream number pattern holders 110 and 208).

Note that the frequency band may be, for example, a resource in resource units (RUs) or tone units. Further, for example, a plurality of tones separated by a predetermined tone interval may be combined into one stream.

For example, in FIG. 8, in a case where frequencies are RU1 < RU2 < RU3 and one stream is transmitted from STA 200 in each RU, the stream of RU1 may be set to stream 1, the stream of RU2 may be set to stream 2, and the stream of RU3 may be set to stream 3 as the stream numbers. Further, for example, in a case where frequencies are RU1 > RU2 > RU3, the stream numbers of the streams of RU1, 2, and 3 may be set to streams 1, 2, and 3, respectively.

Further, for example, in the example of the frequencies of RU1 < RU2 < RU3, in a case where two streams are transmitted in each RU, the stream of RU1 may be set to streams 1 and 2, the stream of RU2 may be set to streams 3 and 4, and the stream of RU3 may be set to streams 5 and 6. Here, the stream numbers in the same RU (e.g., stream 1 and stream 2 in RU1) may be recognized by the difference in the rows of the P-matrix described above, similarly to time division multiplexing.

AP 100 (e.g., channel estimator 105) estimates the UL channel between AP and STA in each stream and each reception antenna, based on the reference signal (e.g., LTF) orthogonally separated. Further, AP 100 (e.g., quality estimator 106) estimates the reception quality for each stream and each reception antenna using the estimated UL channel. As an example, in the reception quality estimation, AP 100 may calculate SINR of each stream and each reception antenna using a calculation formula described in NPL 5.

### (Determination of Stream Number Pattern)

AP 100 (e.g., precoder selector 107) determines a stream number pattern using the calculated reception quality (e.g., SINR). The stream number pattern may include, for example, at least one of a plurality of streams constituting the UL signal. For example, the stream number pattern may include consecutive or non-consecutive stream numbers among the stream numbers of the plurality of streams constituting the UL signal. For example, a method of rank adaptation may be applied to determine the stream number pattern.

As an example, a case will be described in which STA 200 transmits a UL signal using three streams, and AP 100 selects streams 1 and 3 as a combination of stream numbers (stream number pattern) with the largest capacity by rank adaptation for the purpose of maximizing the capacity (communication capacity).

In this case, AP 100 (stream number pattern holder 110) stores stream numbers 1 and 3 obtained by rank adaptation in a storage area and outputs a stream number pattern including stream numbers 1 and 3 to preamble generator 111 and data generator 112.

AP 100 (e.g., data generator 112) generates a notification of the determined stream number pattern and a control signal (e.g., Trigger frame) for causing STA 200 to transmit UL data.

Hereinafter, an example of a method for indicating a stream number pattern by a control signal will be described.

### (1) Method using bitmap:

AP 100 uses a plurality of bits in a control signal to indicate the use/non-use of each of a plurality of streams by the value (0 or 1) of each bit. For example, when STA 200 transmits a UL signal using four streams (streams 1 to 4), and AP 100 determines the stream number pattern as streams 1, 3, and 4, the bitmap is set to "1011." Here, the bits represent the use/non-use of streams 1 to 4 in order from the left, where 1 represents "use" and 0 represents "non-use." Upon reception of the bitmap "1011," STA 200 uses three streams of streams 1, 3, and 4 in the next UL data transmission. In a case where the UL signal uses six streams, a bitmap of six bits may be used, and the number of bits of the bitmap may be set to be variable according to the number of streams.

### (2) Method using a common table between AP 100 and STA 200:

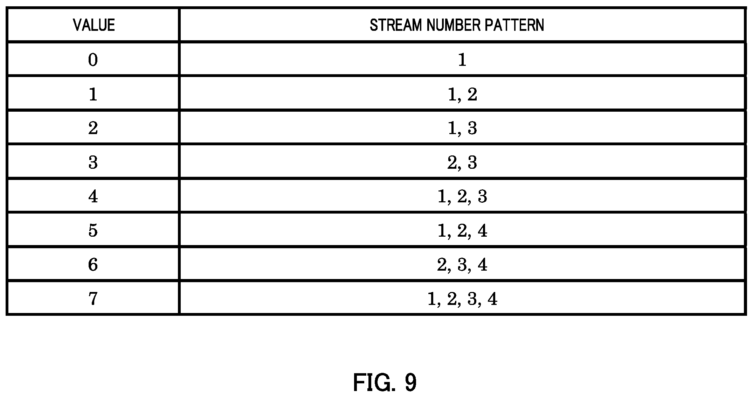

A common table (common table) is defined in advance between AP 100 and STA 200, and AP 100 notifies STA 200 of a value corresponding to the common table by a control signal. FIG. 9 illustrates an example of the common table using three bits in a case where the UL signal uses four streams. In the example of FIG. 9, eight stream number patterns can be notified by three bits (values of 0 to 7).

In addition, for example, when four bits are used for the common table (not shown), AP 100 and STA 200 can cover the stream number patterns for the transmission and reception of the UL signal using four streams (the same as the method using bitmap in (1)). For example, when the table is defined by a smaller number of bits than the number of streams, the signaling amount can be reduced by partially changing (or omitting) the content of the stream number pattern as shown in FIG. 9. For example, in the example of FIG. 9, the pattern for the number of streams 1 is limited to only stream 1, and the cases of other streams are omitted.

Note that the common table may be defined in the standard or may be indicated from AP 100 to STA 200, for example.

### (3) Method of using different tables for each number of streams:

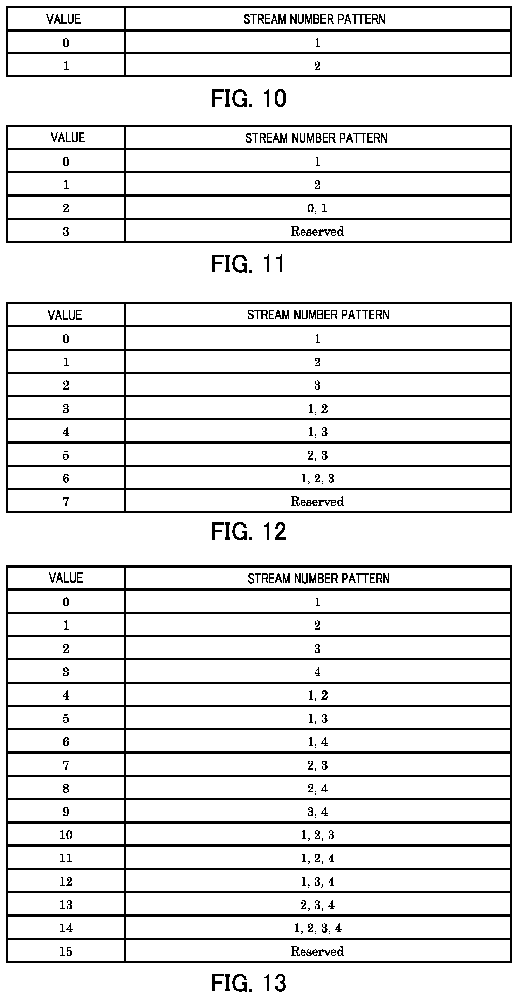

A table of the stream number pattern is defined in the same manner as the method using a common table in (2). In (3), the size of the table is different (changed) for each number of streams. FIGS. 10 to 13 respectively illustrate examples of tables of the stream number pattern for the number of streams 1 to 4. In the examples of FIGS. 10 to 13, a stream number pattern using the same number of bits (1 to 4 bits) as the number of streams 1 to 4 is defined.

Thus, the signaling amount of the table can be reduced according to the number of streams.

Further, a table corresponding to the number of bits less than the number of streams may be defined in the same manner as the method using a common table in (2). In this case, for example, the number of stream number patterns may be reduced by changing (or omitting) some of the stream number patterns defined in the tables shown in FIGS. 10 to 13.

Further, the table may be defined in the standard or may be indicated from AP 100 to STA 200, for example.

### (4) Method using bitmap in case of small number of streams:

For example, as in FIGS. 10 and 11 for the method using a different table for each stream in (3), in a case where the number of streams is small (e.g., in a case where the number of streams is two or less), the use/ non-use of the stream may be notified by the bitmap (value of 0/1) corresponding to each stream as in (1) without using a table. On the other hand, in a case where the number of streams is large (e.g., in a case where the number of streams is greater than two), the stream number pattern may be notified using a table (e.g., FIGS. 12 and 13).

### (Basic Trigger for Indicating Stream Number Pattern)

Regarding the examples of indicating the stream number patterns in (1) to (4) described above, a method for indicating the stream number pattern by using a Basic Trigger (basic type Trigger frame) for the control signal and extending the format of the Basic Trigger will be described.

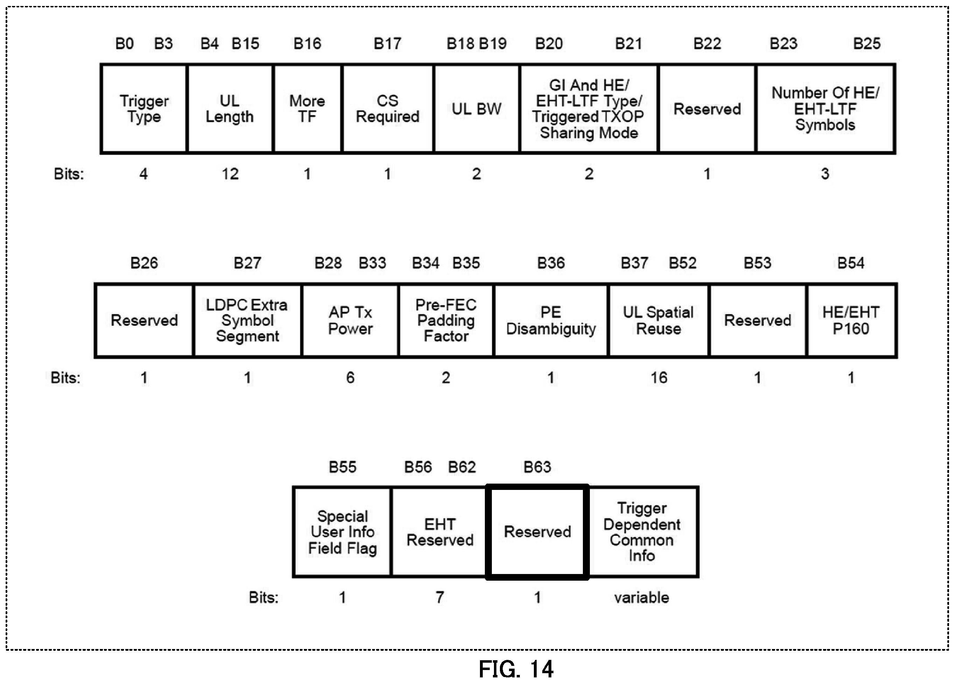

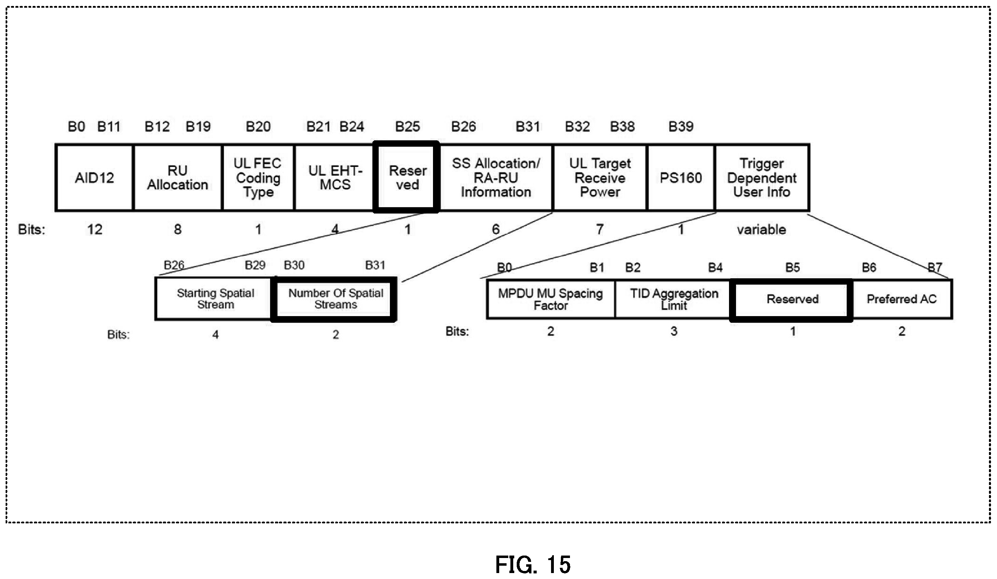

FIG. 14 illustrates a format example of a Common Info field in a Basic Trigger of EHT, and FIG. 15 illustrates a format example of a User Info field in a Basic Trigger of EHT.

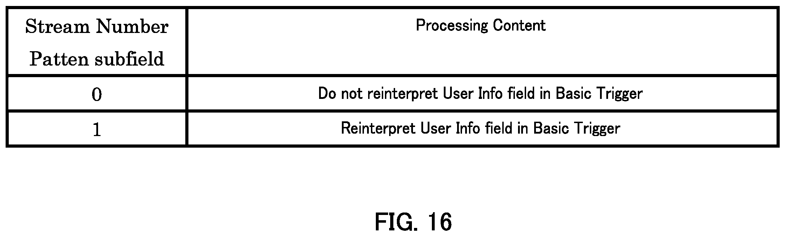

In the Common Info, for example, one of the bits of the Reserved field is used. In the example of FIG. 14, the 1-bit Reserved field at B63 is used for notification of the stream number pattern. This one bit indicates, for example, whether STA 200 should reinterpret the User Info for stream number pattern notification. For example, the subfield name of this one-bit is "Stream Number Pattern," and the processing of the Stream Number Pattern subfield is shown in FIG. 16. As shown in FIG. 16, when the Stream Number Pattern subfield has a value of 0, no reinterpretation of the User Info field is performed; when the Stream Number Pattern subfield has a value of 1, the User Info field is reinterpreted.

Note that, when the Trigger type is different from the Basic Trigger, the Stream Number Pattern subfield may be configured in the Reserved field.

For example, when the Stream Number Pattern subfield has a value of 1, STA 200 reinterprets four bits of the User Info field shown in FIG. 15 (for example, B25, B30, B31, and B5 of the Trigger Dependent User Info) as a stream number pattern. Those four bits may, for example, carry the stream number pattern notification based on any one of the methods (1) to (4) described above.

In the Basic Trigger, the bits available for extension are the four bits shown in FIG. 15. Therefore, when five or more bits are required to indicate the stream number pattern, this may be accommodated by adding a new Trigger Type, or by further using some bits of an existing field (e.g., part of RU Allocation), among other measures.

### (Transmission Timing of Control Signal)

In FIG. 6, AP 100 generates a Basic Trigger (including stream number pattern) as a control signal and transmits the Basic Trigger to STA 200. Further, STA 200 receives the Basic Trigger from AP 100.

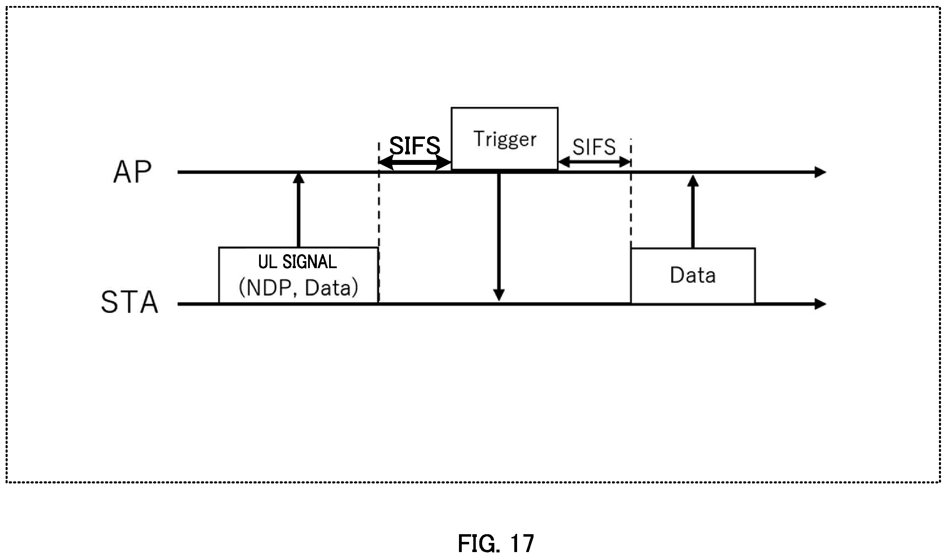

Here, the transmission of the UL signal and the transmission of the Basic Trigger (control signal) may be performed in separate transmission opportunities (TXOPs). Alternatively, the transmissions of the UL signal and the Basic Trigger may be performed in a single transmission opportunity. When the UL signal and the Basic Trigger are transmitted within a single transmission opportunity, the interval between the UL signal and the Basic Trigger (e.g., omitted portion in FIG. 6) may be set to a fixed time (e.g., short interframe space (SIFS)), as illustrated in FIG. 17.

### (Reception of Basic Trigger and Acquisition of Stream Number Pattern by STA)

STA 200 (e.g., separator 202 and preamble demodulator 203) illustrated in FIG. 6 separates the received Basic Trigger into a preamble signal and a data signal, and demodulates each of the signals.

STA 200 (e.g., data demodulator 205 and data decoder 206) demodulates and decodes the data signal based on the control information acquired during the demodulation of the preamble signal, and acquires the stream number pattern included in the data signal.

STA 200 (e.g., stream number pattern holder 208) compares the acquired stream number pattern with the stream numbers of the UL signal already stored, and outputs the corresponding stream numbers to precoder holder 209 and precoding matrix multiplier 213. STA 200 (e.g., precoding matrix multiplier 213) extracts a precoder to be used for UL data transmission (response to the Basic Trigger) based on the acquired stream numbers.

Further, STA 200 may specify the rank based on, for example, the number of stream numbers (or the number of streams) included in the acquired stream number pattern.

As an example, operations are described for the case where STA 200, which has three transmission antennas, transmits a UL signal using three streams (e.g., stream 1, 2, and 3), and obtains from AP 100 a stream number pattern indicating stream numbers 1 and 3.

Precoder W applied by STA 200 to the UL signal is shown in Equation 2.
$W = \left[\begin{matrix}{d}_{11} & {d}_{12} & {d}_{13} \\ {d}_{21} & {d}_{22} & {d}_{23} \\ {d}_{31} & {d}_{32} & {d}_{33}\end{matrix}\right]$

In a case where streams 1 and 3 are selected by AP 100, for UL data transmission, the second column in Equation 2 is deleted, and precoder W' shown in Equations 3 and 4 is applied.
$ω = \left[\begin{matrix}{d}_{11} & {d}_{13} \\ {d}_{21} & {d}_{23} \\ {d}_{31} & {d}_{33}\end{matrix}\right]$
[4] $W ′ = \frac{\left‖W\right‖}{\left‖ω\right‖} ω$

In applying W' to the UL data, similar to the application of the precoder using the Q-matrix described above, each component is multiplied for each transmission stream of the UL data.

Thus, AP 100 notifies STA 200 of the stream number pattern associated with the precoder used for the UL signal. For example, AP 100 implicitly indicates the precoder.

For example, in the method described in NPL 2, a precoder (e.g., precoding matrix) is notified from the AP to the STA. Here, since the size of the precoder changes according to the number of streams or the number of transmission and reception antennas of the UL signal, there is a concern that signaling overhead for precoder notification may increase. In contrast, in Method 1, AP 100 notifies STA 200 of the stream number pattern associated with the precoder that STA 200 has pre-generated (e.g., stream number for that precoder). By the notification of the stream number pattern, the signaling overhead associated with precoder notification can be reduced.

In addition, in the implicit feedback, which is a precoding method with a relatively low overhead, channel quality estimation and precoder calculation are performed assuming reciprocity between uplink and downlink. Here, in a case where reciprocity between uplink and downlink does not hold in implicit feedback, differences may arise between the per-stream quality assessments at the STA and the AP, raising the concern that precoder performance (or reception quality) may degrade. In contrast, in Method 1, AP100 receives a UL signal transmitted from STA200, estimates the quality of each stream of the received UL signal, and determines (or selects) a precoder to be used for UL data transmission based on the quality estimation result. For example, by notifying STA 200 of a stream number pattern that omits (i.e., disables) the coefficient (e.g., column) of the precoder applied to the stream with poor quality, AP 100 can improve reception quality even when uplink/downlink reciprocity does not hold.

In Method 1, the stream number pattern may include non-consecutive stream numbers. For example, in a method where AP 100 notifies STA 200 of the number of streams, STA 200 applies precoders starting from the first (lowest) stream number in order, for the number of streams indicated in the notification. In contrast, because Method 1 allows non-consecutive stream numbers in the stream number pattern, the number of stream-number combinations (patterns) for which AP 100 can estimate the quality increases, enabling selection of stream numbers with better reception quality.

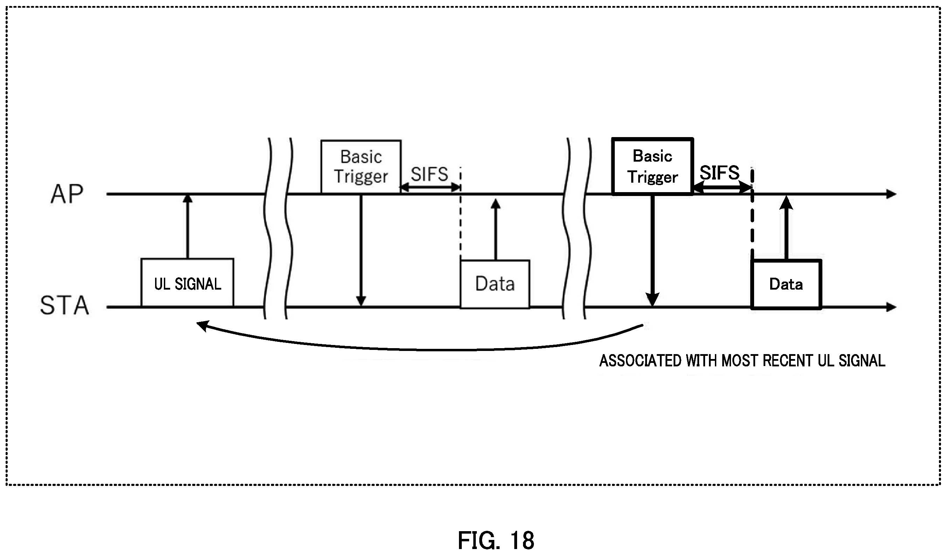

Note that, as illustrated in FIG. 18, the transmission of Basic Trigger by AP 100 and the transmission of UL data by STA 200 may be performed multiple times. In this case, the second and subsequent Basic Triggers may be associated with the most recent precoded NDP. Alternatively, there may be no second or subsequent Basic Trigger, and STA200 may retain the information of the first Basic Trigger and use the information for the second and subsequent data transmissions.

### [Method 2]

In Method 2, AP 100 transmits a signal (e.g., NDPA) indicating precoder generation to STA 200 and transmits a training signal (e.g., NDP) to indicate UL channel estimation and precoder generation of STA 200.

In addition, after the transmission of an NDPA and an NDP, AP 100 notifies STA 200 of a control signal (e.g., Trigger frame) indicating UL signal transmission to STA 200.

STA 200 estimates a channel estimation value using the training signal, generates a precoder based on the channel estimation value, and applies the precoder to transmit a UL signal. Here, the UL signal transmitted by STA 200 may be an NDP to which the precoder is applied (precoded NDP).

AP 100 determines a stream number pattern using the UL signal to which the precoder is applied and which is transmitted from STA 200.

### [Operation Example 2-1]

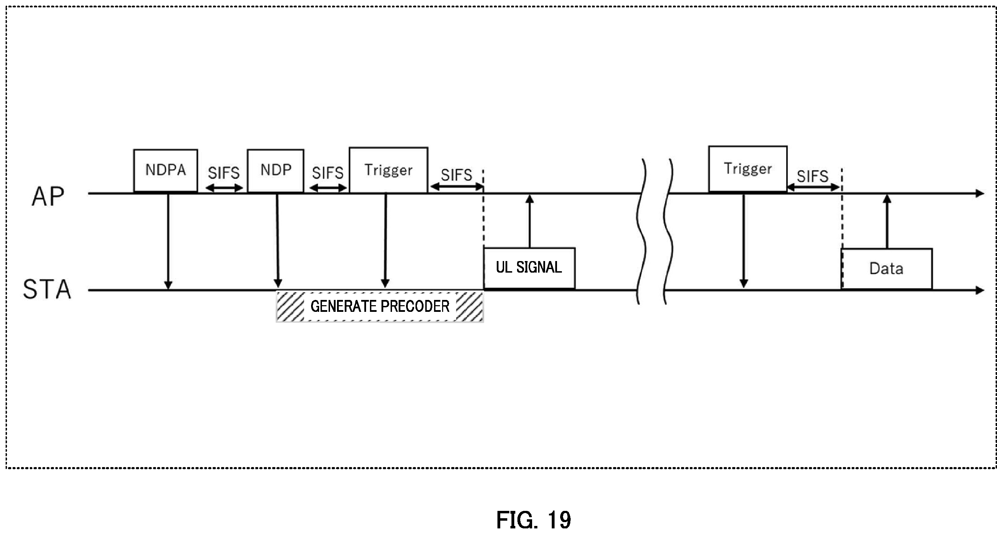

FIG. 19 is a sequence diagram illustrating an operation example of AP 100 (simply referred to as AP) and STA 200 (simply referred to as STA) in Operation Example 2-1 of Method 2.

### (Precoder Generation by STA by Indication of AP)

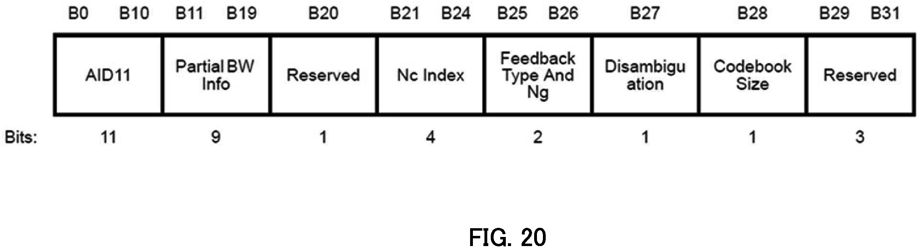

AP 100 (e.g., data generator 112) generates an NDPA frame for indicating precoder generation to STA 200. FIG. 20 illustrates a format example of an STA Info field in the NDPA frame.

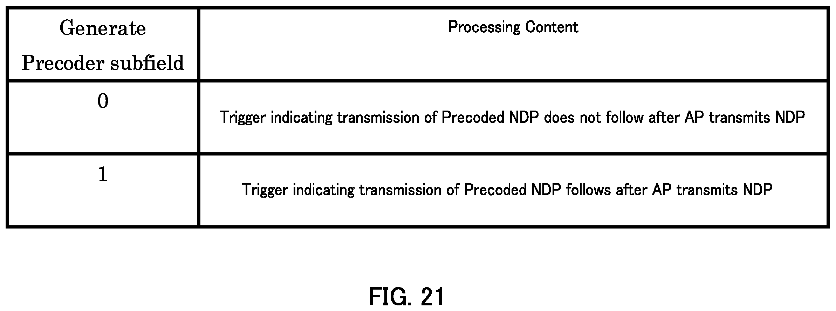

For example, in Method 2, fields B20 to B24 illustrated in FIG. 20 are used. For example, one bit (Reserved) at B20 notifies STA 200 that a Trigger frame indicating transmission of a precoded NDP is continuously transmitted after AP 100 transmits an NDPA and an NDP. As an example, this subfield name is defined as a "Generate Precoder" subfield, and an example of the processing content corresponding to each value (e.g., 0 or 1) of the Generate Precoder subfield is illustrated in FIG. 21.

In FIG. 21, when the value of the Generate Precoder subfield is 1, AP 100 indicates a scheduling result of the UL signal to be transmitted by STA 200 in the field B21 to B24 illustrated in FIG. 20. For example, in B21 to B24, the number of streams, that is, the size of the precoder generated by STA 200 may be assigned (scheduled).

Further, in FIG. 21, when the value of the Generate Precoder subfield is 0, AP 100 does not need to indicate the scheduling result of the UL signal to be transmitted by STA 200 in the field B21 to B24 illustrated in FIG. 20. For example, information of the Nc Index subfield may be notified in B21 to B24.

As illustrated in FIG. 20, the Nc Index subfield is allocated to B21 to B24 before the extension. This subfield indicates the number of columns of a Compressed beamforming feedback matrix (see, e.g., section 9.4.1.67 of NPL 3). In Method 2, AP 100 notifies STA 200 of the stream number pattern instead of the Compressed beamforming feedback matrix, and thus the information of the Nc Index subfield need not be notified.

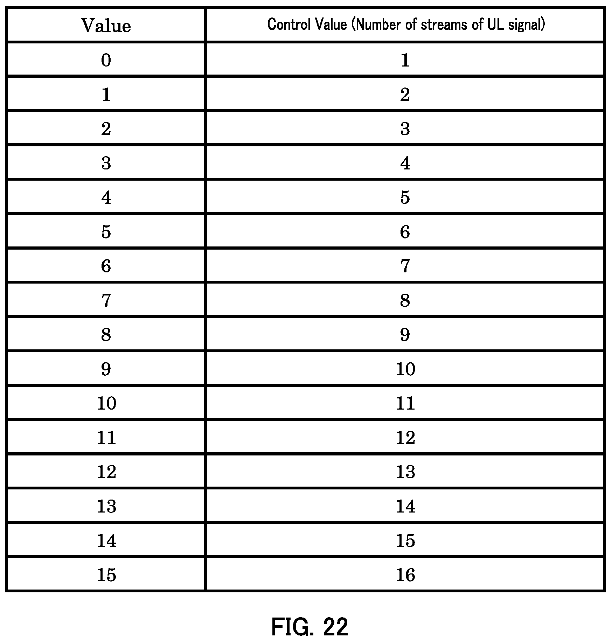

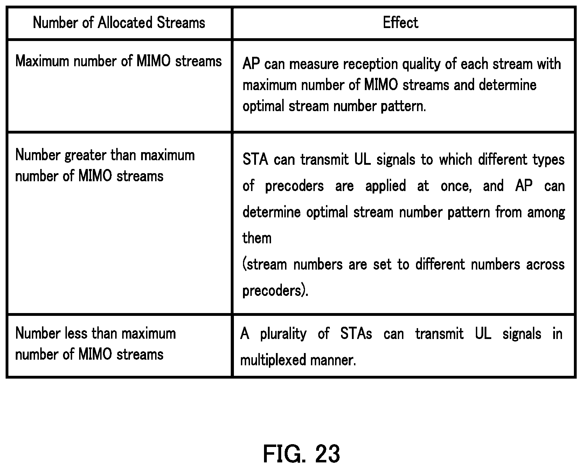

FIG. 22 illustrates an example of a correspondence relationship between the values (Value) set in B21 to B24 illustrated in FIG. 20 and the control value (e.g., the number of transmission streams of the UL signal). Further, FIG. 23 illustrates an example of the number of streams allocated to STA 200 and the effect thereof.

As illustrated in FIG. 19, AP 100 (e.g., preamble generator 111 or data generator 112) generates an NDP after NDPA transmission, and transmits the NDP.

STA 200 (e.g., separator 202, preamble demodulator 203, and data demodulator 205) separates the NDPA transmitted from AP 100 into a preamble signal and a data signal, and demodulates each of the signals. STA 200 (e.g., data decoder 206) decodes the NDPA frame of the data signal. When STA 200 acquires a value of 1 in the Generate Precoder subfield during the decoding of the NDPA frame, STA 200 interprets B21 to B24 of the NDPA frame as the number of streams, and holds the value thereof.

Further, when STA 200 receives the NDP after the reception of the NDPA, STA 200 (e.g., preamble demodulator 203 and channel estimator 204) demodulates the NDP and estimates the quality of the DL channel based on the reference signal included in the NDP.

Here, STA 200 may estimate the quality of a UL channel from the quality estimation value of the DL channel, assuming that there is channel reciprocity between UL and DL. When it is assumed that there is reciprocity between UL and DL, the UL channel can be derived by Equation 5. In Equation 5, H_{UL} indicates the estimated channel matrix of UL, and H_{DL} indicates the estimated channel matrix of DL.
${H}_{UL} ≅ {H}_{DL}^{T}$

STA 200 (e.g., precoder generator 207) generates a UL precoder based on the estimated UL channel (H_{UL}) and the number of streams notified from AP 100.

Here, for each number of allocated streams shown in FIG. 23, STA 200 may generate a UL precoder as follows.
(1) When the number of allocated streams equals the maximum number of MIMO streams:
   STA 200 generates a precoder according to the maximum number of MIMO streams.
(2) When the number of allocated streams is greater than the maximum number of MIMO streams:
   STA 200 distributes the number of allocated streams and generates precoders according to the number of precoder generation methods held by STA 200.

As an example, a case will be described in which STA 200 having a maximum number of MIMO streams of 2 has three precoder generation methods: identity matrix, Zero Forcing (ZF), and Maximum Ratio Combination (MRC), and is notified of an allocation of 6 streams by the NDPA. In this case, STA 200 generates the identity matrix, ZF, and MRC precoders each using 2 streams. These precoders are multiplexed by orthogonal codes and transmitted by a single UL signal. Note that the distribution of the number of allocated streams notified from AP 100 is not limited to the above-described example. For example, under the same conditions, STA 200 may generate a ZF precoder using 3 streams, generate an MRC precoder using 2 streams, and generate an identity matrix precoder using 1 stream, or may generate ZF and MRC precoders each using 3 streams without generating an identity matrix precoder.

Accordingly, AP 100 can select a stream number across precoders, and thus may be unknown for the precoder type applied to the UL signal by STA 200.

(3) When the number of allocated streams is less than the maximum number of MIMO streams:
STA 200 generates a precoder according to the notified number of streams.

The above describes examples of generating a UL precoder according to the number of allocated streams.

STA 200 (e.g., precoder holder 209 and stream number pattern holder 208) stores the generated precoder and the stream number according to the number of transmission streams.

### (Transmission of Signal for Controlling UL Signal)

As illustrated in FIG. 19, AP 100 (e.g., data generator 112) generates a Trigger frame for indicating transmission of a UL signal (precoded NDP) to STA 200, after transmitting the NDPA and NDP, and transmits the Trigger frame.

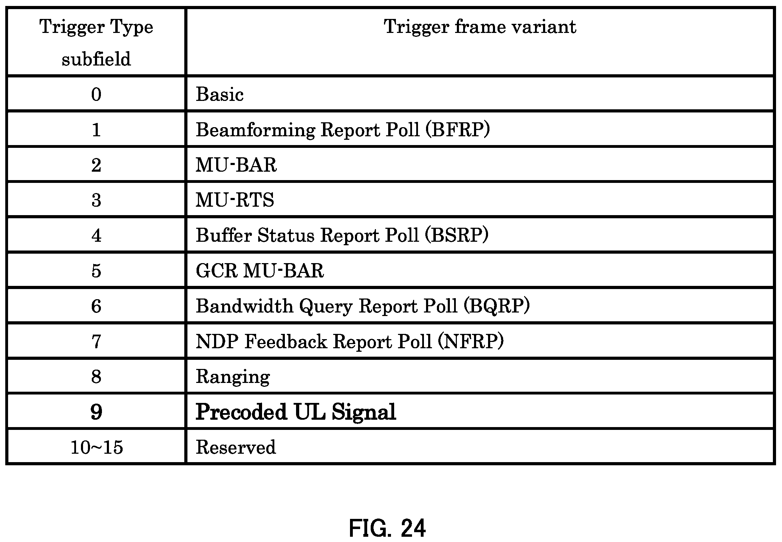

Here, for example, "Precoded UL Signal Trigger" is added as a new Trigger type of the Trigger frame. FIG. 24 illustrates an example in which the content of the existing Trigger type subfield (e.g., see NPL 3) and the added "Precoded UL Signal Trigger" are included as the Trigger type.

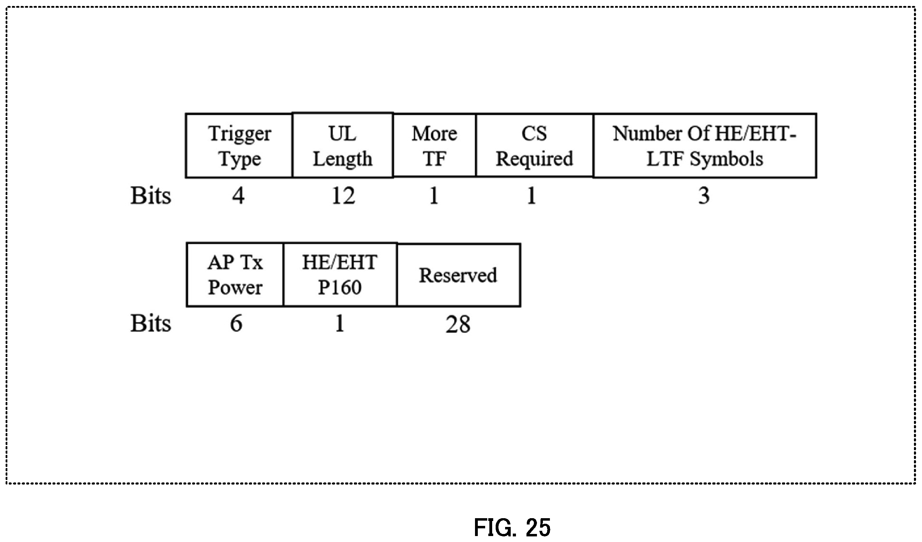

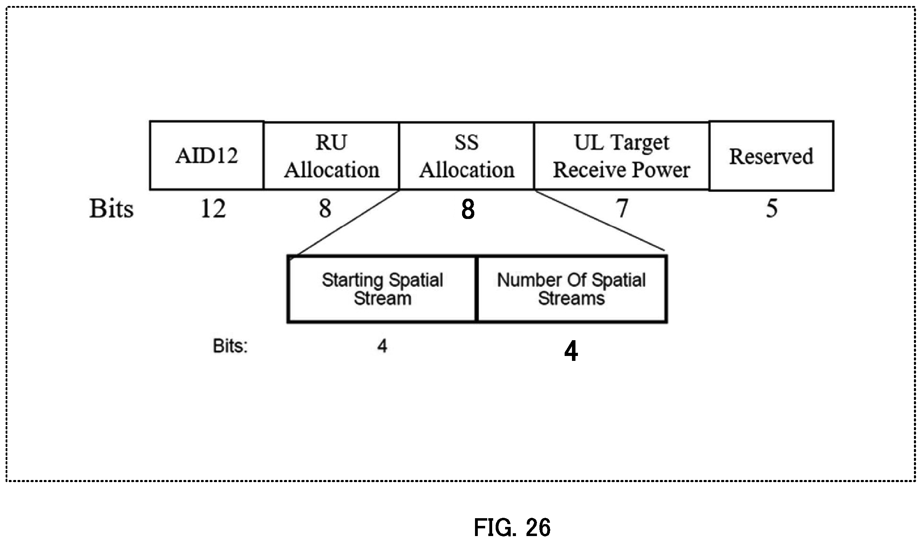

FIG. 25 illustrates an example of a Common Info field of the Precoded UL Signal Trigger, and FIG. 26 illustrates an example of a User Info field of the Precoded UL Signal Trigger.

In the Common Info field illustrated in FIG. 25, subfields (e.g., control information related to data generation) of UL BW, GI And HE/EHT-LTF Type/Triggered TXOP Sharing Mode, LDPC Extra Symbol Segment, Pre-FEC Padding Factor, PE Disambiguity, UL Spatial Reuse, Special User Info field Flag, EHT Reserved, and Trigger Dependent Common Info of the existing Common Info field (e.g., FIG. 14) are set as Reserved in the indication of NDP transmission without data.

For example, the UL BW subfield is a subfield indicating the bandwidth of the TB PPDU, and STA 200 transmits the UL signal based on the bandwidth of the NDP of AP 100, so that the UL BW subfield is used as Reserved in FIG. 25.

In addition, for example, the GI And HE/EHT-LTF Type/Triggered TXOP Sharing Mode subfield is information related to the TB PPDU and TXOP sharing, so that this subfield is used as Reserved in FIG. 25.

In addition, for example, the Pre-FEC Padding Factor subfield and the PE Disambiguity subfield are information related to the MU PPDU and the TB PPDU, so that these subfields are used as Reserved.

In addition, for example, since spatial reuse is not considered in the present embodiment, the UL Spatial Reuse subfield is used as Reserved.

In addition, for example, since the Special User Info field is not used in the present embodiment, the Special User Info Field Flag subfield is used as Reserved.

In addition, for example, the Trigger Dependent Common Info subfield is not used in the present embodiment.

In the User Info field illustrated in FIG. 26, subfields of the UL FEC Coding Type, the UL EHT-MCS, the PS160, and the Trigger Dependent User Info in the existing User Info field of the Basic Trigger (e.g., FIG. 15) are set as Reserved.

For example, the UL FEC Coding Type subfield and the UL EHT-MCS subfield are information related to the TB PPDU, so that these subfields are used as Reserved.

In addition, for example, since STA 200 transmits the UL signal based on the bandwidth of the NDP of AP 100, the PS160 subfield is used as Reserved in FIG. 26.

In addition, for example, the Trigger Dependent User Info subfield is not used in the present embodiment.

In addition, in FIGS. 25 and 26, the same subfield (e.g., UL length and the like) as the existing Common Info field and the existing User Info field has the same function and processing content.

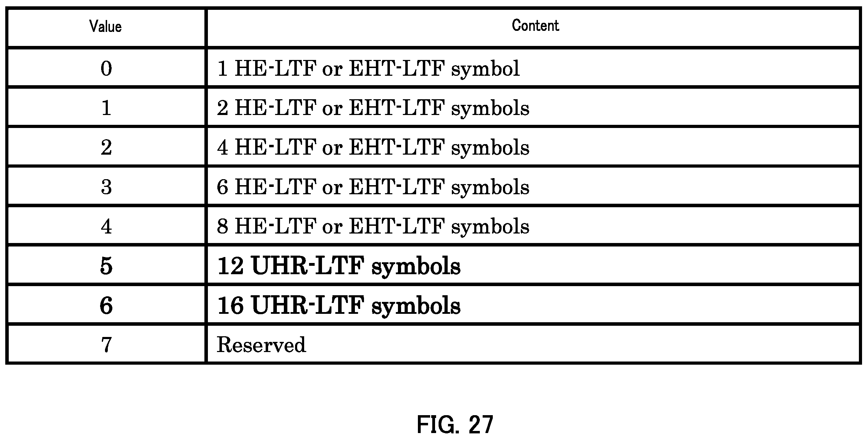

FIG. 27 illustrates an example of a correspondence relationship between a value and a content of the "Number Of HE/EHT-LTF Symbols" subfield in the Common Info field illustrated in FIG. 25. In FIG. 27, the existing content is extended, and contents (e.g., 12 symbols and 16 symbols) of values 5 and 6 are added.

In the above-described extension, the P-matrix size (number of LTF symbols × number of LTF symbols) is extended, aiming throughput improvement by the increase in the number of multiplexable STAs and the number of streams.

Note that, in FIG. 27, the EHT-LTF symbol, which is an LTF symbol of the EHT version, may be referred to as, for example, a "UHR-LTF symbol" in the case of the UHR version.

In addition, the SS allocation field and the Number Of Spatial Streams subfield in the User Info field illustrated in FIG. 26 have an increased number of bits compared to the existing User Info field. This extension is an extension (simple extension) that changes the maximum number of spatial streams that can be transmitted by one STA 200 from 4 to 16.

As described above, the number of streams of the UL signal is notified by, for example, NDPA (B21 to B24) or a Precoded UL Signal Trigger (Number Of Spatial Streams subfield). In a case where the notification is performed by NDPA, the value of the Number Of Spatial Streams subfield in the Precoded UL Signal Trigger may be ignored or set to the same value as the value set in the NDPA.

### (Precoded NDP Transmission and Stream Number Pattern Determination)

As illustrated in FIG. 19, when STA 200 receives a Precoded UL Signal Trigger, STA 200 generates a precoded NDP (UL signal) using the generated precoder and transmits the generated precoded NDP to AP 100. For example, STA 200 (e.g., reference signal generator 210 and precoding matrix multiplier 213) applies the generated precoder to the generated reference signal.

When AP 100 receives the precoded NDP from STA 200, AP 100 estimates the channel and the reception quality of each stream of the precoded NDP and determines a stream number pattern, as in Method 1. Thereafter, AP 100 notifies STA 200 of the stream number pattern using, for example, Basic Trigger. STA 200 transmits UL data by applying a precoder based on the stream number notified by the stream number pattern.

In operation example 2-1, the number of streams of the UL signal can be set to a number greater than or less than the maximum number of MIMO streams, enabling the application of a plurality of precoder types and the increase in the number of STAs that multiplex and transmit the UL signal.

For example, in a case where a plurality of precoders is used (e.g., in a case where the number of allocated streams is greater than the maximum number of MIMO streams), AP 100 can select a stream with better (e.g., the best) reception quality across different types of precoders.

Further, for example, in a case where the number of STAs that multiplex the UL signal is increased (e.g., in a case where the number of allocated streams is less than the maximum number of MIMO streams), AP 100 schedules the plurality of STAs 200 by indicating the number of streams by NDPA, thereby improving the throughput of the entire radio communication system.

Further, AP 100 notifies STA 200 in advance of the presence or absence of the Precoded UL Signal Trigger after the NDP by NDPA, so that STA 200 can generate a precoder from immediately after the NDP reception, that is, before the reception of the Precoded UL Signal Trigger, as shown in FIG. 19. Thus, for example, even an STA with low processing capability is likely to be capable of generating a precoder before transmitting a UL signal.

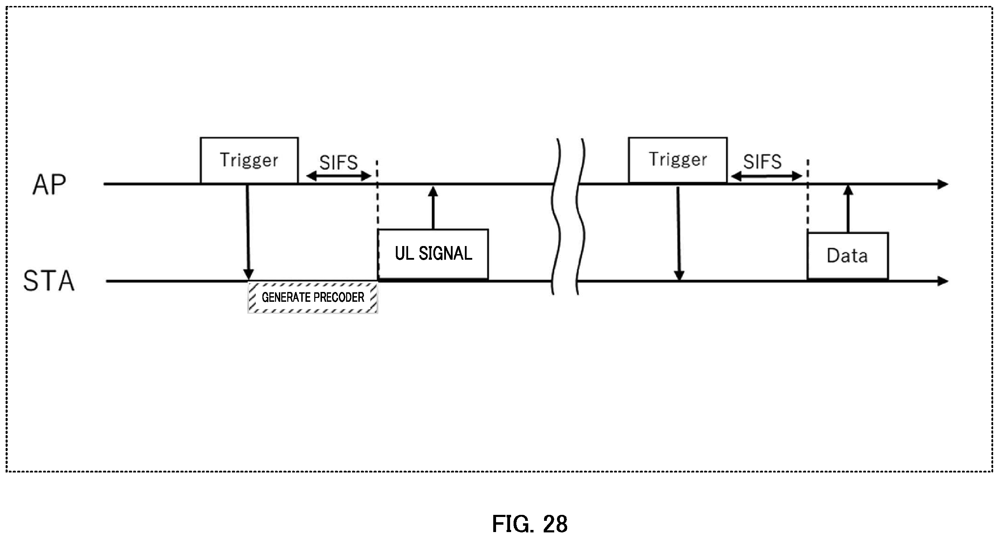

Note that STA 200 may generate a precoder based on a training signal (e.g., LTF) transmitted simultaneously with a control signal (e.g., Trigger frame) transmitted from AP 100. FIG. 28 illustrates an example of a sequence for this case. In this case, AP 100 indicates, to STA 200, generation of a precoder and transmission of a UL signal by a control signal (Precoded UL Signal Trigger).

Further, AP 100 may apply an identity matrix as a precoding matrix to a reference signal and a data signal such that STA 200 can generate a precoder based on the training signal. Thus, the overhead for NDPA and NDP can be reduced.

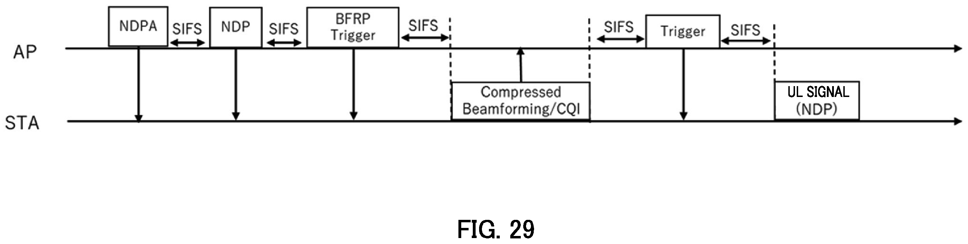

Moreover, the Precoded UL Signal Trigger in Method 2 may be used in combination with a BF report poll (BFRP) Trigger. For example, the sequence illustrated in FIG. 29 may be applied.

### [Operation Example 2-2]

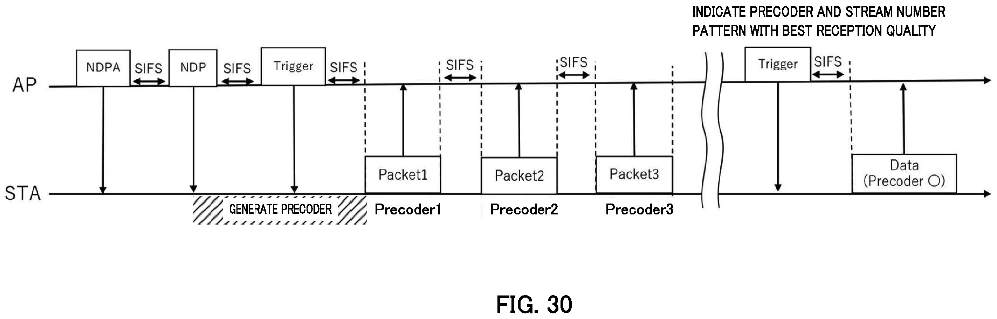

FIG. 30 is a sequence diagram illustrating an operation example of AP 100 (simply referred to as AP) and STA 200 (simply referred to as STA) in Operation Example 2-2 of Method 2.

In Operation Example 2-2, STA 200 transmits one or more packets (UL signals) in response to the control signal (Precoded UL Signal Trigger) used in Operation Example 2-1. At this time, STA 200 may vary the precoder applied to each packet and transmit the packets. AP 100 selects a packet and a stream number pattern with good reception quality. In the example of FIG. 30, STA 200 transmits three packets by time division multiplexing.

### (Indication of Precoder Generation)

In Operation Example 2-2, AP 100 indicates, to STA 200, generation of a precoder by transmitting an NDPA and an NDP, as in Operation Example 2-1.

STA 200 performs channel estimation after receiving the NDP and generates a precoder based on the number of streams notified by the NDPA. At this time, the type of the precoder generated by STA 200 and the number of transmission packets may depend on the implementation or capability (already shared between AP and STA) of STA 200. Further, the number of transmission packets may be notified from AP 100 to STA 200 by, for example, the NDPA or a Trigger frame.

Further, the number of streams in each packet is the same (e.g., the number notified by NDPA). Note that the number of streams in each packet may vary.

STA 200 (e.g., stream number pattern holder 208) stores the stream number associated with each precoder as a different stream number across precoders.

STA 200 (e.g., precoder holder 209) stores all generated precoders.

AP 100 generates a Precoded UL Signal Trigger after transmitting the NDP and transmits the generated Precoded UL Signal Trigger to STA 200.

### (Transmission of Packet)

STA 200 applies the generated precoder to each packet when receiving the Precoded UL Signal Trigger. For example, STA 200 (e.g., reference signal generator 210 and control signal generator 212) generates a reference signal and a control signal to be included in a packet. In addition, STA 200 (e.g., precoding matrix multiplier 213) applies the generated precoder to the reference signal of each packet.

STA 200 (e.g., orthogonalizer 215) multiplies the reference signal included in the stream of each packet by an orthogonal code to orthogonalize the reference signal. The orthogonal codes used between packets may be the same or different.

STA 200 transmits each packet generated by the above operation to AP 100.

### (Packet Reception and Stream Number Acquisition)

Upon reception of the packets from STA 200, AP 100 (e.g., channel estimator 105, quality estimator 106, and precoder selector 107) estimates the channel and the reception quality of each stream and determines the stream number pattern for each packet in the same manner as in Method 1.

At this time, AP 100 compares the reception quality (e.g., capacity) between packets and notifies STA 200 of the stream number pattern of the packet with the best reception quality.

For example, in a case where STA 200 transmits three packets (e.g., Packet 1, Packet 2, and Packet 3) using three streams, the stream number pattern is determined from stream numbers 1, 2, and 3 of Packet 1, stream numbers 4, 5, and 6 of Packet 2, and stream numbers 7, 8, and 9 of Packet 3, and is notified to STA 200.

In addition, as another notification method, AP 100 may notify STA 200 of the field indicating the packet number and the field indicating the stream number separately. For example, in the case of the above-described example using three streams and three packets, AP 100 may notify STA 200 of the stream number pattern including Packet 1 and streams 1 and 2.

STA 200 applies a precoder based on the stream number pattern notified from AP 100 and transmits the UL data.

In operation example 2-2, STA 200 transmits one or more UL signals based on the control information notified by AP 100, and thus AP 100 can select the precoder type and the stream number that are optimal for reception.

Note that, in each packet, the transmission antenna of STA 200 may be varied (e.g., referred to as antenna selecting), and AP 100 may select the transmission antenna that is optimal for reception, based on the stream number pattern.

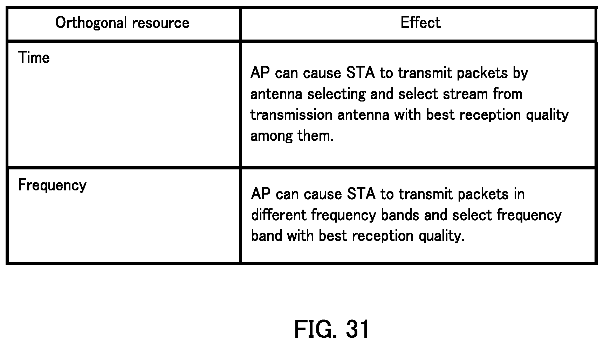

In addition, for example, the multiplexing method in the transmission of a plurality of packets is not limited to time division multiplexing, and another orthogonal resource such as frequency division multiplexing may be used in combination with orthogonal codes. Information regarding the orthogonal resources may be notified from AP 100 to STA 200, for example. This enables AP 100 to select an optimal orthogonal resource (e.g., time resource or frequency resource) for reception. FIG. 31 shows examples of orthogonal resources included in a control signal and examples of their effects.

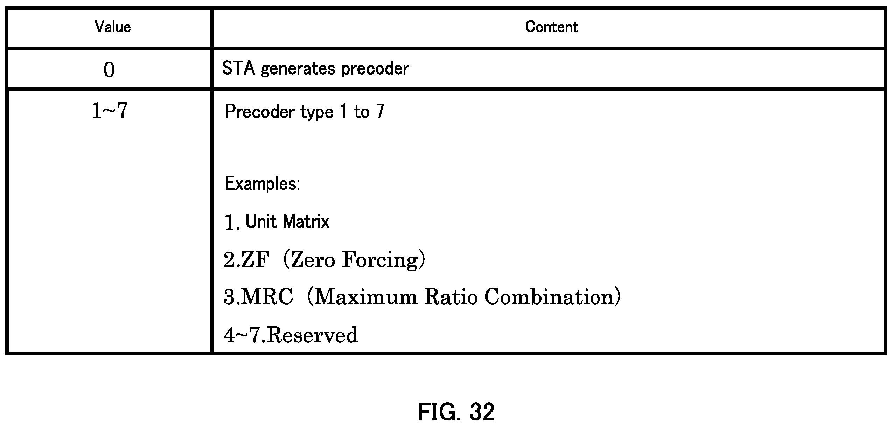

In addition, for example, AP 100 may directly notify STA 200 of the type of the precoder and control STA 200 to form a beam that is optimal for reception at AP 100. For example, a subfield (e.g., 3 bits) for indicating the precoder type may be added to the STA Info of the NDPA (e.g., FIG. 20) or the User Info of the Precoded UL Signal Trigger (e.g., FIG. 26). The name of the added subfield may be defined as, for example, a "Precoder Type" subfield. FIG. 32 shows an example of a correspondence relationship between the value and the content of the Precoder Type subfield. The Precoder Type subfield may include a value (e.g., value of 0 in FIG. 32) indicating that STA 200 generates a precoder without the precoder type being specified by AP 100. In addition, AP 100 may determine the type of the precoder to be notified, based on the capability information of STA 200.

In addition, the capability of STA 200 (e.g., method for generating precoder) may be shared between AP 100 and STA 200 at the start of the above-described sequence by a method in which the capability is notified from STA 200 to AP 100 at the time of association with AP 100, is separately notified by a PPDU or the like, or is defined by a notification by a specification or a beacon.

STA 200 generates a precoder based on the notified precoder type and the number of streams, multiplies the UL signal by the generated precoder, and transmits the multiplied signal.

In addition, AP 100 may allocate a plurality of User Info fields to one STA 200 and may indicate a plurality of precoder types to be notified in each User Info field. In this case, based on operation example 2-2, STA 200 may generate each packet using a plurality of precoder types indicated by AP 100 and may perform multiplex transmission using orthogonal resources such as time or frequency.

The operation examples of AP 100 and STA 200 have been described above.

As described above, in the present embodiment, AP 100 transmits a stream number pattern associated with the UL signal from STA 200 to STA 200, and receives the UL data precoded by STA 200 based on the stream number pattern. In addition, STA 200 receives a stream number pattern associated with the UL signal from STA 200 and transmits the UL data precoded based on the received stream number pattern.

Thus, AP 100 need only notify STA 200 of a pattern of stream numbers associated with the UL signal (e.g., stream constituting the UL signal) from STA 200, and thus, an increase in overhead can be suppressed as compared with a case where AP 100 notifies STA 200 of the precoder determined by AP 100. In addition, AP 100 can determine the stream number (or precoder) based on the reception quality of the UL signal, and thus, for example, suppresses deterioration in reception quality even when the reciprocity of uplink and downlink is not established. Therefore, according to the present embodiment, the efficiency of the transmission control in radio communication can be improved.

### (Embodiment 2)

### [Configuration of Radio Communication System]

The radio communication system according to the present embodiment may include, for example, AP 100a and STA 200. Two or more APs 100a and two or more STAs 200 may be present in the radio communication system.

### [Configuration Example of AP 100a]

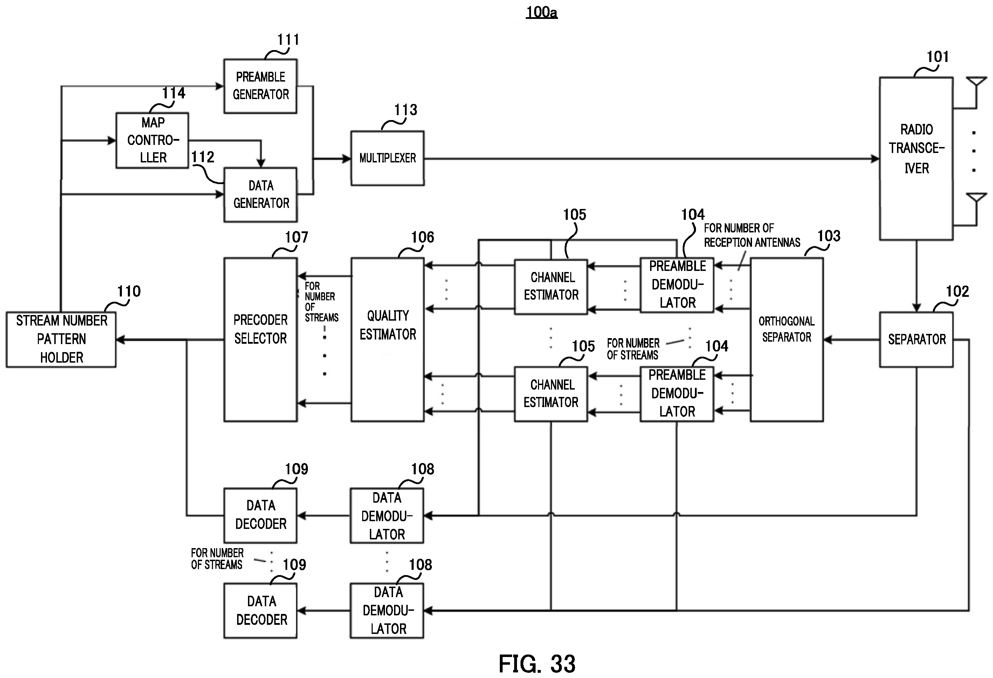

FIG. 33 is a block diagram illustrating a configuration example of AP 100a according to the present embodiment. AP 100a is different from Embodiment 1 in that AP 100a includes MAP (Multi-AP) controller 114.

In FIG. 33, MAP controller 114 indicates, to data generator 112, generation of a control signal (e.g., also referred to as Trigger frame or MAP Trigger) for coordinating between APs in MAP coordination or a signal (e.g., NDPA) to be MAP coordinated transmitted.

### [Configuration Example of STA 200]

The configuration of STA 200 according to the present embodiment may be the same as the configuration of STA 200 according to Embodiment 1 (e.g., FIG. 5).

### [Operation Example of AP 100a and STA 200]

Hereinafter, an operation example of AP 100a and STA 200 will be described.

### [Method 3]

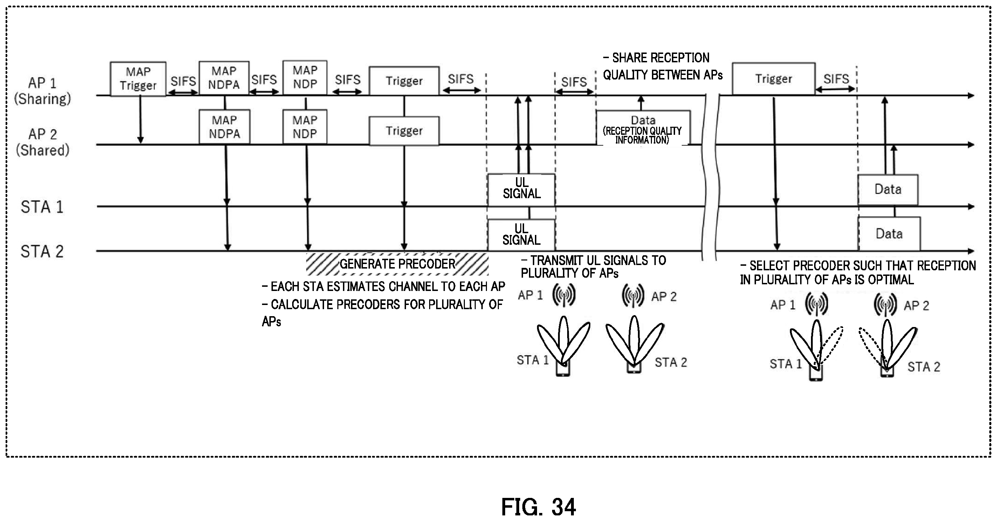

FIG. 34 is a sequence diagram illustrating an operation example of AP 100a (simply referred to as AP) and STA 200 (simply referred to as STA) in Method 3.

In the example of FIG. 34, the Sharing AP is AP1, the Shared AP is AP2, and STA 200 connected to AP1 and AP2 are STA1 and STA2, respectively.

In Method 3, Joint NDP sounding (e.g., see NPLs 7 and 8) in MAP coordinated transmission is used.

As illustrated in FIG. 34, in Method 3, the Sharing AP transmits a MAP Trigger to the Shared AP between the coordinated APs. When the Shared AP receives the MAP Trigger, at the same time as the Sharing AP, the Shared AP transmits a MAP NDPA, a MAP NDP, and a Precoded UL Signal Trigger (e.g., as in Method 2) to each STA 200 (STAs 200 connected to the Sharing AP and the Shared AP).

Thus, channel estimation is possible between the Sharing AP, the Shared AP, and STA 200 connected to each AP. Further, by transmitting and sharing information related to the reception quality measured in the Shared AP to the Sharing AP, the stream number pattern can be determined (the precoder of the STA can be selected) such that the reception is optimal at the plurality of APs 100a.

### (Generation of MAP Trigger)

The Sharing AP (e.g., data generator 112) generates a MAP Trigger.

The MAP Trigger requests, to the Shared AP, the transmission of NDPA (NDPA indicating the generation of a precoder to STA 200) in the same manner as in Method 2, for example.

Note that the signal (MAP Trigger) requesting the transmission of NDPA in the same manner as in Method 2 may be a Control frame different from the Trigger frame or another signal newly defined. In this case, the control frame may include information (e.g., subfield) requesting the transmission of NDPA in the same manner as in Method 2.

In Method 3, as an advantage of using the Trigger frame, the transmission opportunity can be shared (TXOP sharing) with one or more Shared APs, and the number of propagation paths between APs and STAs on which channel estimation is possible can be increased.

Note that, for the format of the MAP Trigger, for example, the format of the existing Basic Trigger may be reused.

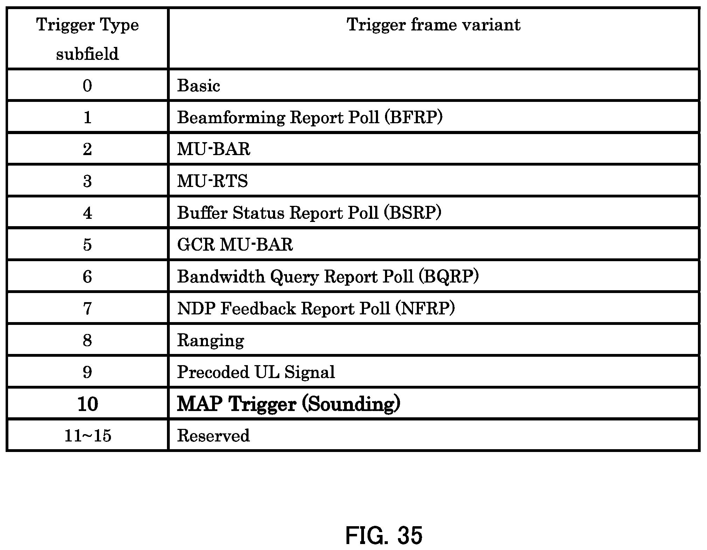

In Method 3, for example, "MAP Trigger (Sounding)" corresponding to the MAP Trigger requesting the transmission of NDPA is newly added to the Trigger Type. Note that the Trigger Type may include the Precoded UL Signal Trigger of Embodiment 1. FIG. 35 illustrates an example of the Trigger Type when the MAP Trigger (Sounding) is newly added.

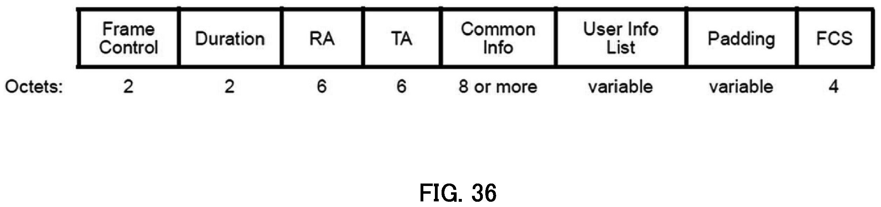

Further, FIG. 36 illustrates a format example of the entire Trigger frame for the MAP Trigger (Sounding). In FIG. 36, in the case of the MAP Trigger (Sounding), a Broadcast address is configured in the RA (Receiver Address) field.

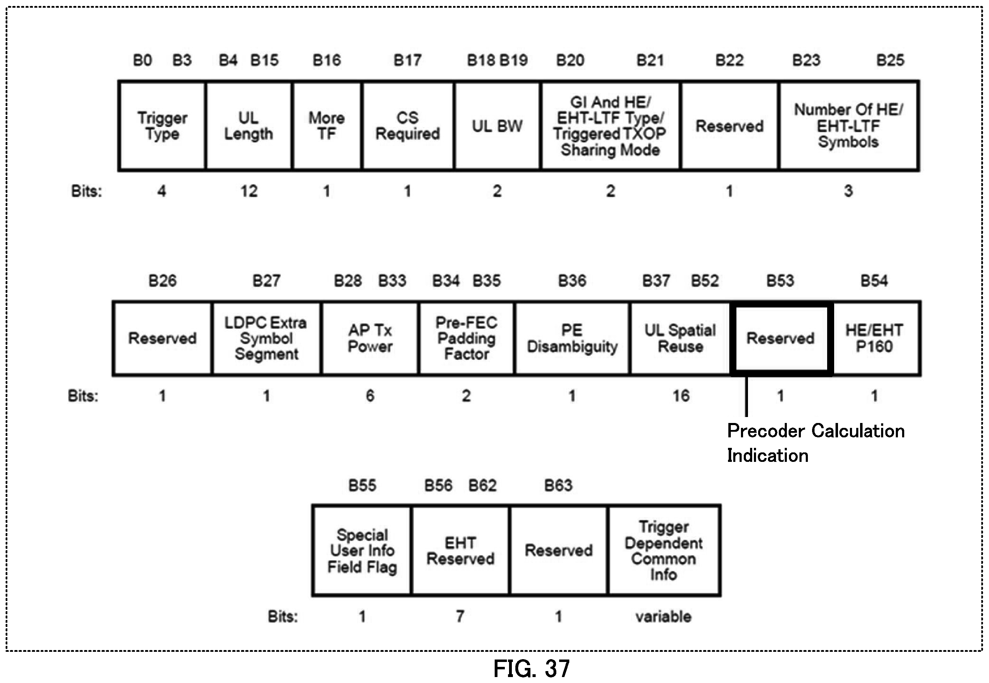

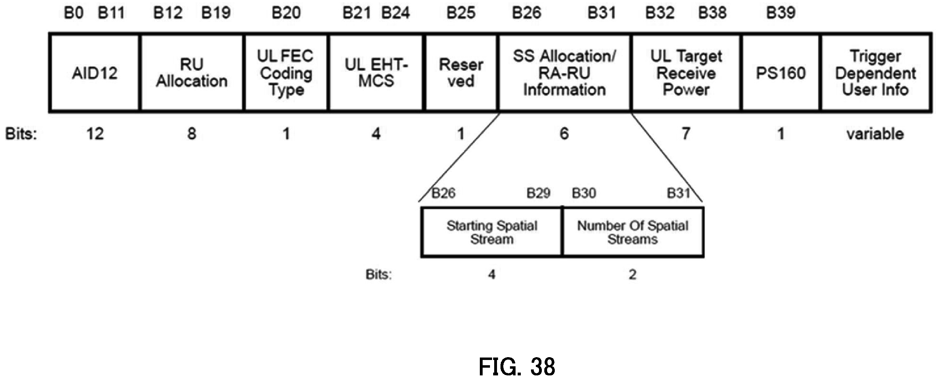

FIG. 37 illustrates an example of the Common Info field of the MAP Trigger (Sounding), and FIG. 38 illustrates an example of the User Info field of the MAP Trigger (Sounding). Note that each format illustrated in FIGS. 37 and 38 is an example in which the format of the Basic Trigger is reused.

In the MAP Trigger (Sounding), a "Precoder Calculation Indication" subfield (e.g., 1 bit) is added to the Common Info field. In the example of FIG. 37, B53 (Reserved in the existing format) is configured as the Precoder Calculation Indication subfield. The Precoder Calculation Indication subfield notifies the Shared AP whether to transmit an NDPA indicating precoder generation to STA 200.

Note that the NDPA indicating the precoder generation described above refers to an NDPA in which the value of the Generate Precoder subfield is set to 1 in Method 2 (e.g., FIGS. 20 and 21).

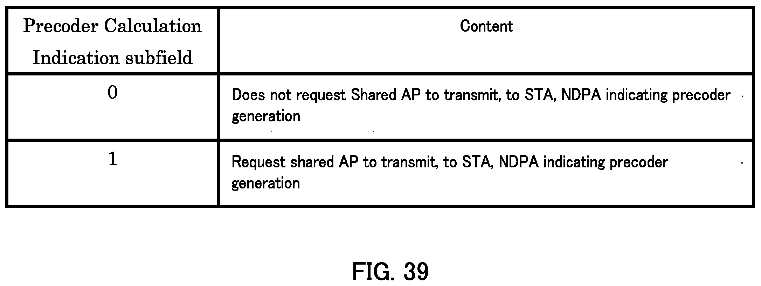

FIG. 39 illustrates an example of the correspondence relationship between the value and the content of the Precoder Calculation Indication subfield. In FIG. 39, when the value of the Precoder Calculation Indication subfield is 1, the Shared AP is requested to transmit, to STA 200, an NDPA indicating precoder generation, and when the value of the Precoder Calculation Indication subfield is 0, the Shared AP is not requested to transmit, to STA 200, an NDPA indicating precoder generation. Further, in FIG. 39, when the value of the Precoder Calculation Indication subfield is 0, the procedure of Joint NDP sounding (e.g., see NPLs 7 and 8) that has already been proposed may be performed.

Further, in the MAP Trigger (Sounding), the Trigger Dependent Common Info field need not be used.

Further, in the User Info field (e.g., FIG. 38) of the MAP Trigger (Sounding), the AID (Association ID (Identification)) of the Shared AP is configured in the AID12 subfield. Further, the Trigger Dependent User Info need not be used.

### (Transmission of MAP NDPA)

The Sharing AP and the Shared AP (e.g., MAP controller 114) indicate, to Data generator 112, generation of a MAP NDPA based on the information related to the MAP Trigger.

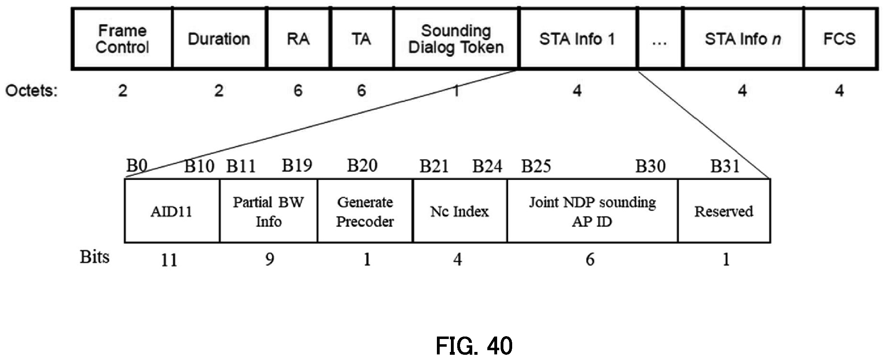

The MAP NDPA may be in a format in which the existing NDPA frame is extended as shown in FIG. 40. In FIG. 40, the value of the "Generate Precoder" subfield in the STA Info field is set to 1, and precoder generation is indicated to STA 200. Note that, in a case where the value of the Generate Precoder subfield is set to 0, the precoder generation need not be indicated to STA 200.

When the Generate Precoder subfield is 1, B21 to B24 shown in FIG. 40 may notify each STA 200 of the number of streams of the UL signal transmitted by the STA 200 (method similar to Method 2).

Further, B25 to B30 shown in FIG. 40 are configured as a "Joint NDP sounding AP ID" subfield, and notify the identifier of AP 100a that transmits the MAP NDP. This identifier may be an identifier (different from MAC address) determined by the AP (Coordination AP) that manages the MAP coordination during the negotiation of the MAP coordination set.

Further, by allocating a plurality of STA Info fields to one STA 200, information related to a plurality of APs 100a (e.g., all APs 100a) that transmit the MAP NDP is notified.

Note that, in a plurality of STA Info fields allocated to one STA 200, the number of streams of the UL signal (e.g., B21 to B24) may all have the same value. Alternatively, the number of streams of the UL signal may be configured in the first STA Info field among the plurality of STA Info fields, and the other STA Info fields (B21 to B24) may be set as Reserved.

As shown in FIG. 34, the Sharing AP and the Shared AP transmit the generated MAP NDPA to STAs 200 connected to the APs (STA1 for AP1 and STA2 for AP2) at the same timing.

STA 200 demodulates and decodes the received MAP NDPA, and acquires the destination AP and the number of streams of the UL signal (Precoded NDP) based on the Joint NDP sounding AP ID and the number of streams (e.g., B21 to B24) included in the Data signal.

### (Transmission of MAP NDP)

The Sharing AP and the Shared AP (e.g., preamble generator 111) generate a MAP NDP after transmitting the MAP NDPA.

Here, the number of rows and the head row number of the orthogonal code (P-matrix) applied to the MAP NDP by the Shared AP are values notified using the "Number Of Spatial Streams" subfield and the "Starting Spatial Stream" subfield in the MAP Trigger (e.g., FIG. 38).

For example, the Sharing AP notifies the Shared AP of the number of rows (Number Of Spatial Streams) and the head row number (Starting Spatial Stream) of the orthogonal code applied to the MAP NDP. For example, in a case where the Sharing AP and the Shared AP transmit the MAP NDP using four streams, the Sharing AP notifies the Shared AP of Number Of Spatial Streams = 3 (four streams) and Starting Spatial Stream = 4 by the MAP Trigger. Thus, for example, it is notified that the Sharing AP uses four rows of Index 0 to 3 and the Shared AP uses four rows of Index 4 to 7.

As shown in FIG. 34, the Sharing AP and the Shared AP transmit the generated MAP NDP at the same time and the same frequency.

### (Precoder Generation by STA)

In a case where STA 200 receives the MAP NDP, STA 200 performs demodulation of the preamble signal included in the MAP NDP, channel estimation, and precoder generation. For example, STA 200 (e.g., channel estimator 204) may estimate the UL channel by assuming the DL channel for each AP 100a and the reciprocity based on the MAP NDP. For example, STA 200 (e.g., precoder generator 207) generates a precoder based on the number of streams notified by the MAP NDPA.

Here, the generated precoder forms a beam for each AP 100a that has transmitted the MAP NDP.

### (Precoded UL Signal Trigger Transmission by AP)

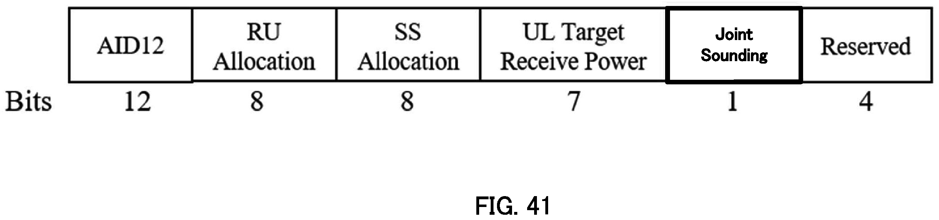

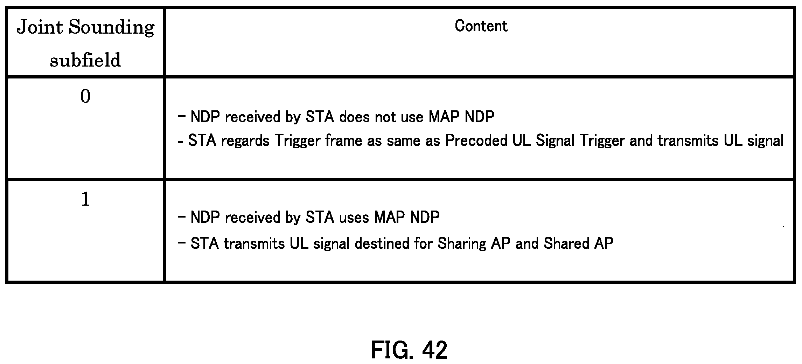

Each AP 100a (e.g., data generator 112) generates a Precoded UL Signal Trigger after transmitting the MAP NDP. For example, the format of the User Info field in the Precoded UL Signal Trigger in Method 2 may be extended as illustrated in FIG. 41. For example, in FIG. 41, a "Joint Sounding" subfield is newly added. FIG. 42 illustrates an example of a correspondence relationship between the value and the content of the Joint Sounding subfield.

As illustrated in FIG. 34, the Sharing AP and the Shared AP transmit the generated Precoded UL Signal Trigger to STA 200.

### (UL Signal Transmission by STA)

In a case where STA 200 receives the Precoded UL Signal Trigger, STA 200 separates the preamble signal and the data signal of the Precoded UL Signal Trigger and demodulates each of them. Further, STA 200 (e.g., data decoder 206) acquires the control information included in the Precoded UL Signal Trigger.

STA 200 (e.g., reference signal generator 210 and control signal generator 212) generates the preamble signal included in the UL signal.

At this time, STA 200 configures APs notified by the Joint NDP sounding AP ID of the MAP NDPA as the destinations. For example, in the example of FIG. 42, in a case where the value of the Joint Sounding subfield is 1, STA 200 determines that the NDP received by STA 200 corresponds to a MAP NDP and determines the destination of the UL signal to be the Sharing AP and the Shared AP. Further, in the example of FIG. 42, in a case where the value of the Joint Sounding subfield is 0, STA 200 determines that the NDP received by STA 200 does not correspond to the MAP NDP, and also regards the Trigger frame as a Precoded UL Signal Trigger similar to Method 2 to determine the destination of the UL signal.

STA 200 (e.g., precoding matrix multiplier 213) applies the generated precoder to the reference signal (and the data signal in a case where the UL signal is a TB PPDU).

When MAP coordination is performed, STA 200 transmits the generated UL signal to the Sharing AP and the Shared AP, as illustrated in FIG. 34.

### (Sharing of Quality Information between APs)

Each AP 100a performs channel estimation and reception quality estimation based on the preamble signal included in the received UL signal.

The Shared AP (e.g., preamble generator 111 and data generator 112) generates a data signal (e.g., MU PPDU) for transmitting the quality information (e.g., reception quality information) estimated by the Shared AP to the Sharing AP. As illustrated in FIG. 34, the Shared AP transmits the generated data signal to the Sharing AP. Thus, the reception quality between each AP 110a and STA 200 is shared among the plurality of APs 110a.

### (Stream Number Pattern Determination and UL Data Transmission)

After the reception of the data signal from the Shared AP, the Sharing AP demodulates and decodes the data signal and stores the reception quality information.

The Sharing AP (e.g., precoder selector 107) determines the stream number pattern of each STA 200 based on the received reception quality information of the Shared AP and the reception quality information estimated by the Sharing AP from the UL signal.

For example, as illustrated in FIG. 34, the Sharing AP (e.g., data generator 112) notifies each STA 200 of the transmission of UL data using the Basic Trigger of Method 1. In the example of FIG. 34, AP1 (Sharing AP) notifies STA1 connected to AP1 of the stream number such that the beam is not directed to AP2 (Shared AP). Further, AP1 notifies STA2 connected to AP2 of the stream number such that the beam is not directed to AP1 and the beam is directed to AP2.

When receiving the Basic Trigger, STA 200 applies the precoder to the UL data signal based on the acquired stream number pattern, for example, in the same manner as in Method 1, and transmits UL data to each destination AP 100a.

The operation example of AP 100a and STA 200 according to the present embodiment has been described above.

In the present embodiment (Method 3), a plurality of APs 100a perform NDP sounding in a coordinated manner, which enables UL precoder selection considering interference to the Overlapping Basic Service Set (OBSS) AP, thereby improving the system throughput.

### (Variation)

Hereinafter, a method for extending the above embodiments (e.g., Method 1 to Method 3) to UL MU-MIMO in which a plurality of STAs 200 transmit multiplexed UL signals and UL data to one AP (AP 100 or AP 100a) will be described.

In the case of MU conditions, the techniques in Methods 1 to 3 may be simply extended. Here, the spatial streams allocated to each STA 200 are made orthogonal by differentiating the starting Index. Therefore, for example, by configuring the Starting Spatial Stream subfield (e.g., B26 to B29) for each STA 200 in the User Info field (e.g., FIG. 15) of the Basic Trigger of Method 1, code division multiplexing among MUs using orthogonal codes (e.g., P-matrix) is enabled.

As an example, a case will be described where STA1 and STA2 each transmit UL signals using three streams to one AP (AP 100 or AP 100a), and the AP notifies STA1 of stream numbers 1 and 3, and notifies STA2 of stream numbers 1, 2, and 3.

In this case, since STA1 can use the P-matrix starting from the first row, the value of the Starting Spatial Stream for STA1 is set to 0 (corresponding to the first row), and transmission of two streams with stream numbers 1 and 3 is notified. Since two rows (for two streams) of the P-matrix are used for STA1, the value of the Starting Spatial Stream for STA2 becomes 2 (e.g., corresponding to the third row), and transmission of three streams is notified. Here, for example, when STA3 is additionally multiplexed, since five rows (for five streams) of the P-matrix are used for STA1 and STA2, the value of the Starting Spatial Stream for STA3 becomes 5 (e.g., corresponding to the sixth row).

By multiplexing a plurality of STAs 200 using MU in Methods 1 to 3, the AP can select MU pairs with good reception quality at the AP (e.g., combinations of STAs 200 and the number of streams) by considering the reception quality of precoders that are not orthogonal between the STAs 200.

The embodiments of the present disclosure have been each described, thus far.

Note that, in each of the above-described embodiments, the BF between AP and STA has been described, but each of the above-described embodiments is not limited to the application to the communication between AP and STA, and may be applied to, for example, the communication between APs in the MAP.

Further, in each of the above-described embodiments, the "control signal" including the stream number pattern may be, for example, a Trigger frame or may be another signal different from the Trigger frame.

Further, in each of the above-described embodiments, the time corresponding to "most recent" (e.g., represented by X) may be defined in advance in the standard, or may be notified from the AP (e.g., AP 100 or AP 100a) to STA 200 by a beacon or the like. For example, in a case where the time exceeds time X from the transmission timing of the UL signal, STA 200 may transmit the UL data without precoding. Further, for example, the identifier of the UL signal may be transmitted from the AP in order to associate the stream number pattern with the UL signal other than the most recent UL signal. The identifier of the UL signal may be an identifier (e.g., also referred to as a token) that is temporarily issued for each UL signal, or may be an identifier that is given for each precoder. In a case of the identifier given for each precoder, the same identifier may be assigned to a plurality of UL signals using the same precoder.

The identifier of the UL signal may be included in the control signal (e.g., Trigger frame) from AP 100. For example, the existing subfield bits (e.g., 2 bits of the Preferred AC subfield in the Trigger Dependent User Info or 1 bit each from the RU Allocation subfield and the PS160 subfield) may be used as a subfield for notifying the identifier of the UL signal in the User Info field of the Basic Trigger illustrated in FIG. 15.

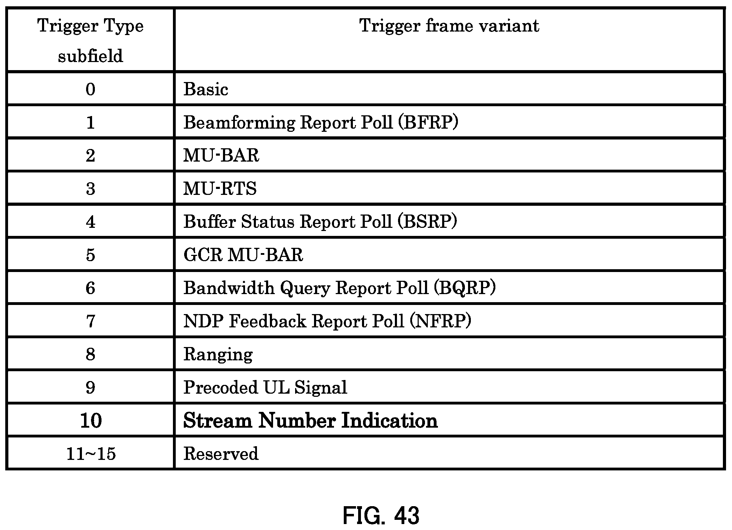

Further, AP 100 may include the identifier of the UL signal in a Trigger frame of a new Trigger type and notify STA 200 of the identifier. For example, as illustrated in FIG. 43, a "Stream Number Indication Trigger" that is a new Trigger type may be added as a control signal including the identifier of the UL signal.

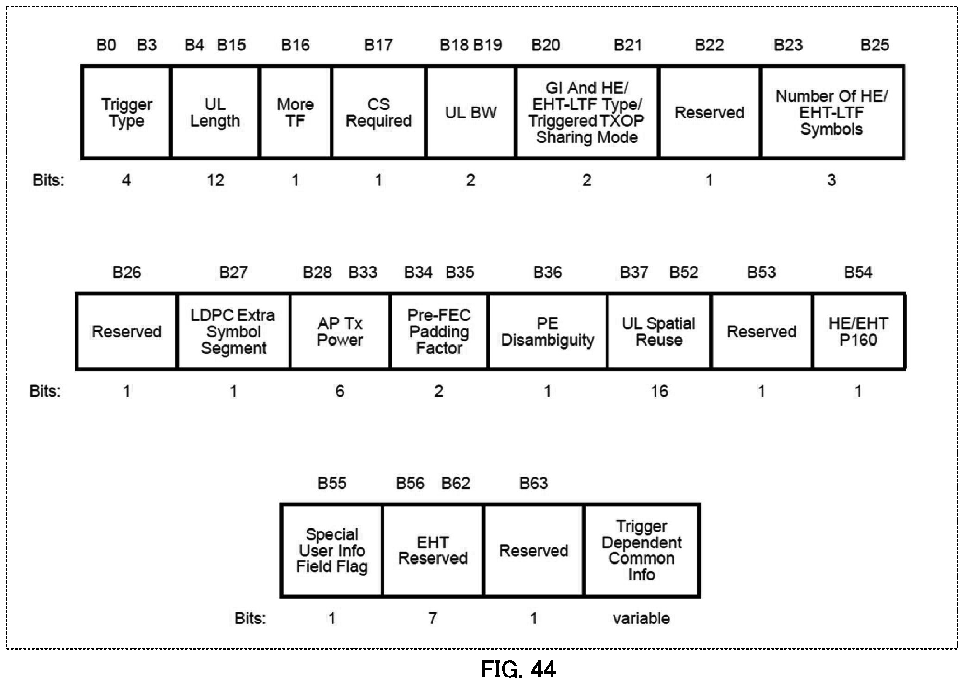

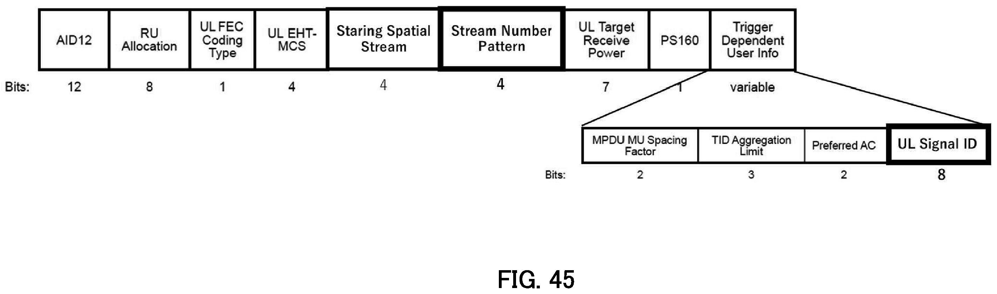

Here, the format of the Stream Number Indication Trigger may be derived from the format of the existing Basic Trigger. FIG. 44 illustrates an example of a Common Info field of the Stream Number Indication Trigger, and FIG. 45 illustrates an example of a User Info field of the Stream Number Indication Trigger. Note that each format illustrated in FIGS. 44 and 45 illustrates an example in which the format of the Basic Trigger is reused.

Here, in the User Info field illustrated in FIG. 45, the Stream Number Pattern subfield is a subfield that notifies the stream number pattern illustrated in Embodiment 1 and FIGS. 10 to 13 and 15 with 4 bits. Further, the UL Signal ID subfield illustrated in FIG. 45 is a subfield that notifies the identifier of the UL signal (the UL signal transmitted before the Stream Number Indication Trigger transmitted by AP 100) associated with the stream number pattern with 8 bits. Note that the number of bits in the Stream Number Pattern subfield and the UL signal ID subfield is an example, and other numbers of bits may be used.

Further, in each of the above-described embodiments, the operation of UL transmission when there is no Basic Trigger (when STA 200 does not receive a Trigger frame) may be any of the following:
(A) STA 200 performs precoding based on the most recent indication from AP 100 and transmits UL data.
(B) STA 200 transmits UL data without performing precoding.
(C) AP (AP 100 or AP 100a) determines (or selects) any of the operations (A) and (B) and notifies STA 200 of the determination (or selection) by a beacon or the like.

Further, in each of the above-described embodiments, the operation of the STA that supports the existing standard may be any of the following.
(A) STA does not generate a precoder. The STA provides feedback for the NDP from AP. The STA treats the NDPA of Method 2 and Method 3 as the NDPA of the existing standard.
(B) STA does not transmit feedback for the operation (A) until receiving a BF report poll (BFRP) from AP.
(C) STA does not generate a precoder and does not transmit a UL signal.

In addition, in each of the above-described embodiments, the field (or subfield) used for the indication of the control information is merely an example, and another field or subfield may be used. In addition, the number of bits used for the notification of the control information in each field or subfield is merely an example, and another number of bits may be used. Further, the term "UHR" used in the name of the field or subfield may be omitted, or another term representing a version of another standard or a capability of a terminal may be used instead of the term "UHR."

In addition, the format of the signal described in each of the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

Further, in the above embodiment, the value, size (number of bits), and content corresponding to the value of the control information notified to STA 200 are merely examples, and other values, sizes, and content may be used.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on the difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: transmission circuitry, which, in operation, transmits, to a terminal, information related to a pattern of a stream associated with an uplink signal from the terminal; and reception circuitry, which, in operation, receives a signal precoded based on the pattern.

In the embodiment of the present disclosure, the pattern includes at least one of a plurality of streams applied to the uplink signal.

In the embodiment of the present disclosure, the pattern includes non-consecutive numbers among numbers assigned to the plurality of streams.

In the embodiment of the present disclosure, the uplink signal is a Null Data Packet (NDP) transmitted using the plurality of streams or a signal including data transmitted using the plurality of streams.

In the embodiment of the present disclosure, the uplink signal is a signal received by the access point from the terminal within a defined time.

In the embodiment of the present disclosure, the uplink signal is a most recently received signal among signals received by the access point from the terminal.

In the embodiment of the present disclosure, the transmission circuitry transmits, to the terminal, a training signal and a signal indicating generation of a precoder, and the pattern is determined using the uplink signal to which the precoder is applied, the precoder being generated based on a channel estimation value estimated by the terminal using the training signal.

In the embodiment of the present disclosure, the transmission circuitry transmits, to the terminal, a control signal indicating transmission of the uplink signal.

In the embodiment of the present disclosure, the pattern is determined based on a channel estimation value between each of a plurality of access points and the terminal.

A terminal according to an embodiment of the present disclosure includes: reception circuitry, which, in operation, receives information related to a pattern of a stream associated with an uplink signal from the terminal; and transmission circuitry, which, in operation, transmits a signal precoded based on the pattern.

In a communication method according to an embodiment of the present disclosure, an access point transmits, to a terminal, information related to a pattern of a stream associated with an uplink signal from the terminal, and receives a signal precoded based on the pattern.

In a communication method according to an embodiment of the present disclosure, a terminal receives information related to a pattern of a stream associated with an uplink signal from the terminal, and transmits a signal precoded based on the pattern.

The disclosure of Japanese Patent Application No. 2023-191792, filed on November 9, 2023, including the specification, drawings and abstract, is incorporated herein by reference in its entirety.

### Industrial Applicability

An exemplary embodiment of the present disclosure is useful for radio communication systems.

### Reference Signs List

100, 100a AP
101, 201 Radio transceiver
102, 202 Separator
103 Orthogonal separator
104, 203 Preamble demodulator
105, 204 Channel estimator
106 Quality estimator
107 Precoder selector
108, 205 Data demodulator
109, 206 Data decoder
110, 208 Stream number pattern holder
111 Preamble generator
112, 211 Data generator
113, 216 Multiplexer
114 MAP controller
200 STA
207 Precoder generator
209 Precoder holder
210 Reference signal generator
212 Control signal generator
213 Precoding matrix multiplier
214 Modulator
215 Orthogonalizer

## Claims

1. An access point, comprising:
transmission circuitry, which, in operation, transmits, to a terminal, information related to a pattern of a stream associated with an uplink signal from the terminal; and
reception circuitry, which, in operation, receives a signal precoded based on the pattern.

2. The access point according to claim 1, wherein
the pattern includes at least one of a plurality of streams applied to the uplink signal.

3. The access point according to claim 2, wherein
the pattern includes non-consecutive numbers among numbers assigned to the plurality of streams.

4. The access point according to claim 2, wherein
the uplink signal is a Null Data Packet (NDP) transmitted using the plurality of streams or a signal including data transmitted using the plurality of streams.

5. The access point according to claim 1, wherein
the uplink signal is a signal received by the access point from the terminal within a defined time.

6. The access point according to claim 1, wherein
the uplink signal is a most recently received signal among signals received by the access point from the terminal.

7. The access point according to claim 1, wherein
the transmission circuitry transmits, to the terminal, a training signal and a signal indicating generation of a precoder, and
the pattern is determined using the uplink signal to which the precoder is applied, the precoder being generated based on a channel estimation value estimated by the terminal using the training signal.

8. The access point according to claim 7, wherein
the transmission circuitry transmits, to the terminal, a control signal indicating transmission of the uplink signal.

9. The access point according to claim 1, wherein
the pattern is determined based on a channel estimation value between each of a plurality of access points and the terminal.

10. A terminal, comprising:
reception circuitry, which, in operation, receives information related to a pattern of a stream associated with an uplink signal from the terminal; and
transmission circuitry, which, in operation, transmits a signal precoded based on the pattern.

11. A communication method, comprising:
transmitting, by an access point, to a terminal, information related to a pattern of a stream associated with an uplink signal from the terminal; and
receiving, by the access point, a signal precoded based on the pattern.

12. A communication method, comprising:
receiving, by a terminal, information related to a pattern of a stream associated with an uplink signal from the terminal; and
transmitting, by the terminal, a signal precoded based on the pattern.
